(19)

Europäisches
Patentamt

European
Patent Office

Office européen
des brevets

(11) EP 4 756 732 A1

(12) **EUROPEAN PATENT APPLICATION**
published in accordance with Art. 153(4) EPC

(43) Date of publication:
**10.06.2026 Bulletin 2026/24**

(21) Application number: **24864272.0**

(22) Date of filing: **17.07.2024**

(51) International Patent Classification (IPC):
**G06V 10/75** (2022.01)

(52) Cooperative Patent Classification (CPC):
**G06V 10/22; G06T 7/12; G06T 7/13; G06T 7/194;**
**G06V 10/25; G06V 10/26; G06V 10/44;**
**G06V 10/74; G06V 10/75; G06V 10/751;**
**G06V 10/764; G06V 10/80; G06V 10/82;**
**G06V 20/70;** G06T 2207/20084

(86) International application number:
**PCT/CN2024/106044**

(87) International publication number:
**WO 2025/055548 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.09.2023 CN 202311189472**

(71) Applicant: **Tencent Technology (Shenzhen)**
**Company Limited**
**Shenzhen, Guangdong 518057 (CN)**

(72) Inventors:
• **ZHAN, Jiawei**
  **Shenzhen, Guangdong 518057 (CN)**
• **LIU, Jun**
  **Shenzhen, Guangdong 518057 (CN)**
• **WANG, Chengjie**
  **Shenzhen, Guangdong 518057 (CN)**

(74) Representative: **EP&C**
**P.O. Box 3241**
**2280 GE Rijswijk (NL)**

(54) **IMAGE PROCESSING METHOD AND APPARATUS, AND RELATED DEVICE**

(57) Disclosed in embodiments of the present application are an image processing method and apparatus, and a related device, which are applicable to the technical field of computers. The method comprises: obtaining a service image comprising a target object, obtaining a template image, and determining an object detection region from the template image; looking up for a region matching the object detection region in the service image, determining a found region as an initial positioning region, and determining a pixel position transformation relationship on the basis of a pixel position of a pixel in the object detection region and a pixel position of a pixel in the initial positioning region; on the basis of the pixel position transformation relationship, determining a local mapping region corresponding to a local reference region in the service image, and using the local mapping region as a target positioning region; and identifying a foreground region in the target positioning image, and performing edge curve fitting processing on pixels in the foreground region, to obtain an edge curve of the target object. By using the embodiments of the present application, the accuracy and stability of the edge curve obtained by fitting can be improved.

obtain a service image that includes a target object and obtain a template image that includes a template object, the template object and the target object are of the same object type; determine an object detection region where the template object is located in the template image, a region size of the object detection region being smaller than a region size of the service image — S101

identify, in the service image, a matched region having a highest region similarity degree with the object detection region; and determine a pixel position mapping matrix between the template image and the service image based on coordinates of pixels in the object detection region and coordinates of pixels in the matched region — S102

determine a local mapped region in the service image corresponding to a predefined local reference region in the template image based on the pixel position mapping matrix — S103

identify, in the local mapped region, a foreground region of the target object, and obtain an edge curve of the target object in the local mapped region by performing edge curve fitting processing on pixels in the foreground region — S104

FIG. 3

**Description**

RELATED APPLICATION

This application claims priority to Chinese Patent Application No. 2023111894721, entitled "IMAGE PROCESSING METHOD AND APPARATUS, AND RELATED DEVICE" filed with the China National Intellectual Property Administration on September 14, 2023, which is incorporated herein by reference in its entirety.

FIELD OF THE TECHNOLOGY

This application relates to the field of computer technologies, and in particular, to an image processing method and apparatus, and a related device.

BACKGROUND OF THE DISCLOSURE

Currently, when a specific object in an image (for example, a product in a product image obtained in an industrial scenario) is detected, curve fitting may be performed on an edge curve of the object (for example, the product). Currently, the fitting of the edge curve is mainly implemented by performing edge detection on the object (for example, the product). A common edge detection algorithm is determining the edge curve through segmentation based on a grayscale abrupt change by using discontinuity of grayscale values.

However, it is found during practice that edge misdetection is easy to occur for the edge curve determined by using the discontinuity of the image grayscale values of the product image. For example, once a highlight region or a dirty region appears on the product, it is easy to determine an edge of the highlight region or the dirty region as an edge of the product. For example, once the color of the product is close to the color of a background, grayscale values of pixels are not easy to change abruptly, and an edge of the product cannot be correctly determined. It can be learned from this that when the edge curve fitting is performed on the object (for example, the product) in the image by using the discontinuity of the grayscale values, it is easy to obtain an incorrect edge curve through fitting. This reduces accuracy and stability during the curve fitting.

SUMMARY

Embodiments of this application provide an image processing method and apparatus, and a related device, to help improve accuracy and stability of an edge curve that is of a target object and that is obtained through fitting.

An aspect of the embodiments of this application provides an image processing method, the method including:

obtaining a service image that includes a target object, and obtaining a template image that includes a template object, the template object and the target object are of the same object type; determining an object detection region where the template object is located in the template image, a region size of the object detection region being smaller than a region size of the service image;

identifying, in the service image, a region having a highest region similarity degree with the object detection region as a matched region; and determining a pixel position mapping matrix between the template image and the service image based on coordinates of pixels in the object detection region and coordinates of pixels in the matched region;

determining a local mapped region in the service image corresponding to a predefined local reference region based on the pixel position mapping matrix; and

identifying, in the local mapped region, a foreground region of the target object, and obtaining an edge curve of the target object in the local mapped region by performing edge curve fitting processing on pixels in the foreground region.

An aspect of the embodiments of this application provides an image processing apparatus, the apparatus including:

an image obtaining module, configured to: obtain that includes a target object, and obtaining a template image that includes a template object, the template object and the target object are of the same object type, and determine an object detection region where the template object is located in the template image, a region size of the object detection region being smaller than a region size of the service image;

a transformation relationship determining module, configured to: identify, in the service image, a matched region having a highest region similarity degree with the object detection region; and determine a pixel position mapping matrix between the template image and the service image based on coordinates of pixels in the object detection region and coordinates of pixels in the matched region;

a region mapping module, configured to: determining a local mapped region in the service image corresponding to a predefined local reference region based on the pixel position mapping matrix; and

a curve fitting module, configured to: identify, in the local mapped region, a foreground region of the target object, and obtain an edge curve of the target object in the local mapped region by performing edge curve fitting processing on pixels in the foreground region.

An aspect of the embodiments of this application provides a computer-readable storage medium. The computer-readable storage medium stores a computer program, and the computer program is adapted to be loaded and executed by a processor, to cause a computer device having the processor to perform the image processing method provided in the embodiments of this application.

An aspect of the embodiments of this application provides a computer program product or a computer program. The computer program product or the computer program includes computer instructions, and the computer instructions are stored in a computer-readable storage medium. A processor of a computer device reads the computer instructions from the computer-readable storage medium, and the processor executes the computer instructions, to cause the computer device to perform the image processing method provided in the embodiments of this application.

According to the embodiments of this application, when the service image including the target object is obtained, the template image used for assisting in positioning the target object may be obtained, to determine the object detection region from the template image. The region size of the object detection region herein is smaller than the region size of the service image. In this way, in the embodiments of this application, when the region matching the object detection region is found in the service image, the found region may be quickly determined as the initial positioned region of the target object, so that the pixel position transformation relationship may be determined based on the pixel position of the pixel in the object detection region and the pixel position of the pixel in the initial positioned region. Further, in the embodiments of this application, when the local reference region (the local reference region herein is a local region, of the template object, that is pre-marked in the template image and that needs to be focused on) is determined from the template image, the local mapped region corresponding to the local reference region may be directly determined from the service image based on the pixel position transformation relationship, so that the local mapped region may be used as the target positioned region of the target object. Further, in the embodiments of this application, the foreground region corresponding to the target object may be identified in the target positioned image corresponding to the target positioned region, and then the edge curve fitting processing may be performed on the pixels in the foreground region, to obtain the edge curve of the target object. It can be learned from this that in the embodiments of this application, an initial positioned region may be first determined quickly in the service image based on an object detection region in a template image, then a pixel position transformation relationship may be determined based on the initial positioned region and the object detection region, and pixel position transformation is performed on a local region (namely, the foregoing local reference region) pre-marked in the template image, to obtain a local mapped region corresponding to the local reference region, and then quickly use the local mapped region as a target positioned region positioned in the service image, so that when a foreground region is subsequently identified in a target positioned image corresponding to the target positioned region, an edge curve may be quickly and accurately determined based on the foreground region. In the embodiments of this application, foreground recognition is performed on the image (namely, the target positioned image) corresponding to the local region of the target object. In this way, impact of an uncertain factor (such as a highlight region or a dirty point) of the target object on a foreground recognition process can be ultimately reduced, to improve accuracy of the foreground region recognition, thereby improving, in a process of obtaining the edge curve through fitting by using the pixels in the foreground region, accuracy of the edge curve obtained through fitting. In addition, in the embodiments of this application, as the edge curve fitting is performed on the local region of the target object during the edge curve fitting, a small quantity of pixels are used for obtaining the edge curve of the target object fitting. In this way, a quantity of edge curves that satisfy a fitting condition but actually greatly differ can be reduced, and the accuracy and stability of the edge curve that is of the target object and that is obtained through fitting can be improved.

BRIEF DESCRIPTION OF THE DRAWINGS

FIG. 1 is a schematic structural diagram of an image processing system according to various embodiments of this application.

FIG. 2 is a schematic diagram of a scenario of an image processing method according to various embodiments of this application.

FIG. 3 is a schematic flowchart of an image processing method according to various embodiments of this application.

FIG. 4 is a schematic diagram of a template image according to various embodiments of this application.

FIG. 5 is a schematic diagram of a scenario of window sliding according to various embodiments of this application.

FIG. 6 is a schematic diagram of a region mapping effect according to various embodiments of this application.

FIG. 7 is a schematic diagram of an effect of a target foreground recognition network according to various embodiments of this application.

FIG. 8 is a schematic structural diagram of a feature extraction component according to various embodiments of this application.

FIG. 9 is a schematic diagram of a foreground recognition effect according to various embodiments of this application.

FIG. 10 is a schematic flowchart of an image processing method according to various embodiments of this application.

FIG. 11 shows a process of determining an edge pixel set according to various embodiments of this application.

FIG. 12 is a schematic flowchart of determining an edge curve according to various embodiments of this application.

FIG. 13 is a schematic structural diagram of an image processing apparatus according to various embodiments of this application.

FIG. 14 is a schematic structural diagram of a computer device according to various embodiments of this application.

DESCRIPTION OF EMBODIMENTS

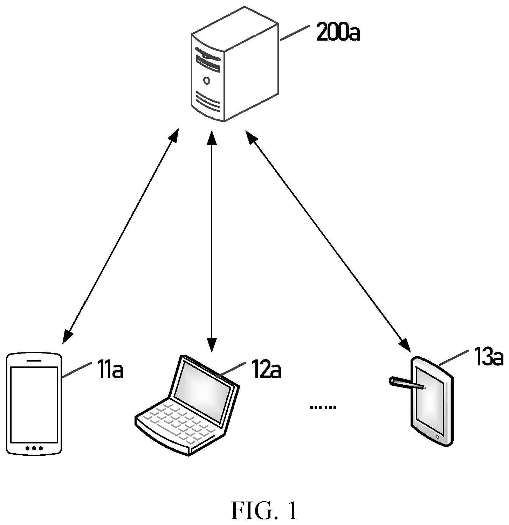

Embodiments of this application provide an image processing solution. It is proposed in the image processing solution that an initial positioned region matching an object detection region in a template image may be first determined quickly in a service image based on the object detection region, and then pixel position transformation may be performed on some pixels in a local reference region (for example, pixels at four vertexes of a mark display frame of the local reference region) based on a pixel position transformation relationship between the initial positioned region and the object detection region, to obtain, through mapping in the service image, a local mapped region corresponding to the local reference region, where the local mapped region obtained through mapping may be collectively referred to as a target positioned region of the target object, so that when a foreground region in which a local region of the target object is located is identified in a target positioned image corresponding to the target positioned region, an edge curve of the target object may be quickly obtained through fitting by using pixels in the foreground region. In the embodiments of this application, in a process of performing foreground recognition by using the image processing solution, the foreground recognition is performed on an image (namely, the target positioned image) corresponding to the local region of the target object. In this way, impact of an uncertain factor (such as a highlight region or a dirty point) of the target object on the foreground recognition process can be reduced, to improve accuracy of the foreground region recognition, thereby improving accuracy of the edge curve obtained through fitting. In addition, in the embodiments of this application, in a process of performing curve fitting by using the image processing solution, the edge curve fitting is essentially performed on the local region of the target object. Therefore, a small quantity of pixels participate in the fitting to obtain the edge curve of the target object. In this way, a quantity of edge curves that satisfy a fitting condition but actually greatly differ can be reduced, and accuracy and stability of the edge curve that is of the target object and that is obtained through fitting can be improved, thereby improving efficiency of the edge curve fitting to some extent.
Refer to FIG. 1. FIG. 1 is a schematic structural diagram of an image processing system according to various embodiments of this application. As shown in FIG. 1, the image processing system may include a terminal device cluster and a server. As shown in FIG. 1, the terminal device cluster may include one or more terminal devices. For example, the plurality of terminal devices may specifically include a terminal device 11a, a terminal device 12a, and a terminal device 13a shown in FIG. 1. In addition, the server may be a server 200a shown in FIG. 1. Quantities of terminal devices and servers included in the image processing system are merely examples. In an actual application scenario, the quantities of terminal devices and servers may be flexibly set correspondingly according to an implementation requirement. In the embodiments of this application, all the plurality of terminal devices (for example, the terminal device 11a, the terminal device 12a, and the terminal device 13a) in the terminal device cluster may establish communication connections to the server via a network (namely, a medium that provides a communication link through a wired communication link, a wireless communication link, an optical cable, or the like), so that data exchange may be performed between the plurality of terminal devices and the server through the communication connections.

A client may run on any terminal device (for example, the terminal device 12a) in the terminal device cluster, and the client may be an application that provides a local service for a user (also referred to as a service object or an operation object). The server 200a shown in FIG. 1 may be a background server corresponding to the client. A program configured to provide services such as a resource and service data for the client may run in the server 200a. For example, in the embodiments of this application, the client running on the terminal device may be a client configured to provide an image processing service (namely, the foregoing local service). In this way, the user may perform, through the client, operations such as viewing an image obtained through image processing.

The terminal device (for example, the terminal device 12a) may include, but is not limited to, a mobile phone, a computer, an intelligent voice interaction device, an intelligent household appliance, a vehicle-mounted terminal, an aircraft, a smart sound box, and the like. This is not limited herein. The server 200a may be an independent physical server, may be a server cluster or a distributed system including a plurality of physical servers, or may be a cloud server that provides a basic cloud computing service, for example, a cloud service, a cloud database, cloud computing, a cloud function, cloud storage, a network service, cloud communication, a middleware service, a domain name service, a security service, a content delivery network (CDN), big data, and an artificial intelligence platform. This is not limited herein.

The image processing solution in the embodiments of this application may be applied to a computer device. For example, the computer device may be a terminal device in the terminal device cluster shown in FIG. 1, or may be the server in FIG. 1. This is not limited herein.

For example, when the image processing solution in the embodiments of this application is specifically applied to the terminal device (for example, the terminal device 11a in FIG. 1), the user may directly perform the image processing solution through the terminal device 11a. In this way, when the terminal device 11a finally determines an edge curve of a specific industrial component or a specific product (namely, a target object) by using the image processing solution, a target positioned image of the target object and the edge curve that is of the target object and that is determined in the target positioned image may be quickly displayed on the terminal device 11a, so that the user may view an effect of the edge curve obtained through fitting by using the image processing solution.

For another example, when the image processing solution in the embodiments of this application is specifically applied to the server (for example, the server 200a in FIG. 1), the user may send, to the server 200a through the terminal device (for example, the terminal device 11a), a request for determining an edge curve of a target object in a service image. Further, after obtaining the request, the server 200a may perform the image processing solution, to finally determine the edge curve of the target object. Further, the server 200a may send, to the terminal device (for example, the terminal device 11a) corresponding to the user, an obtained target positioned image and the edge curve that is of the target object and that is determined in the target positioned image, so that the terminal device (for example, the terminal device 11a) may display the received target positioned image and display the determined edge curve of the target object in the target positioned image. In this way, the user may view, in the terminal device, an effect of the edge curve obtained through fitting on the server side by using the image processing solution.

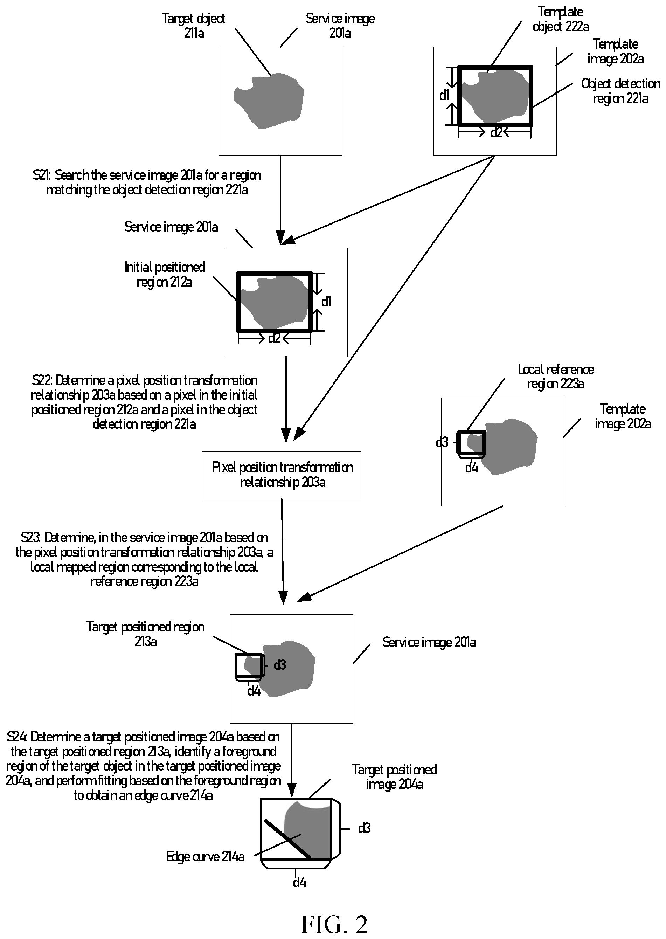

Further, refer to FIG. 2. FIG. 2 is a schematic diagram of a scenario of obtaining an edge curve through fitting by using an image processing solution according to various embodiments of this application. In a process in which a computer device obtains the edge curve through fitting by using the image processing solution, a related image processing method may include at least operations S21 to S24 shown in FIG. 2.

Specifically, as shown in FIG. 2, the computer device may be configured to obtain, when obtaining a service image (for example, a service image 201a shown in FIG. 2) including a target object, a template image (for example, a template image 202a shown in FIG. 2) used for assisting in positioning the target object. In some embodiments of this application, the template image is an image that may be used for assisting in positioning a specific industrial component or a specific type of industrial component in an industrial scenario. The target object included in the service image 201a may include at least a target object 211a shown in FIG. 2. Similarly, a template object included in the template image 202a may be a template object 222a shown in FIG. 2, and the template object 222a is a reference object that exists in the template image 202a and that may be used for positioning reference when the template image 202a is used for assisting in positioning the target object 211a. In some embodiments of this application, in the template image 202a, a region in which a positioning frame for the detected template object 222a is located may be determined as an object detection region 221a shown in FIG. 2.

In other words, because the object detection region 221a may be a largest circumscribed rectangular region determined by using a complete object contour of the entire template object, background content is not excessively included in the object detection region 221a. In this way, interference from the background content in a background region may be reduced to some extent in a subsequent process of assisting in positioning the target object. The template object may be an object having a shape the same as that of the target object or an object having an object type the same as that of the target object. For example, the target object herein may be any component in a large quantity of industrial components that are mass-produced according to the template object in the template image in the industrial scenario.

As shown in FIG. 2, the size of the object detection region 221a may be d1 × d2, where d1 represents the region height of the object detection region 221a, and d2 represents the region width of the object detection region 221a. Further, as shown in FIG. 2, the computer device may perform operation S21: Search the service image 201a for a region matching the object detection region 221a. Specifically, the service image 201a is searched for a region matching the template object 222a in the object detection region 221a. Then, the computer device may determine the found region (namely, the found region matching the template object 222a) as an initial positioned region 212a. For example, as shown in FIG. 2, the region size (also referred to as the size) of the initial positioned region 212a is consistent with the size of the object detection region 221a, that is, may be d1 × d2.

Further, the computer device may perform operation S22: Determine a pixel position transformation relationship 203a based on a pixel in the initial positioned region 212a and a pixel in the object detection region 221a. The pixel position transformation relationship 203a may indicate a position transformation relationship from the pixel in the initial positioned region 212a to the pixel in the object detection region 221a. Then, the computer device may perform operation S23: Determine, in the service image 201a based on the pixel position transformation relationship 203a, a local mapped region corresponding to a local reference region 223a. In other words, the computer device may perform, by using the pixel position transformation relationship 203a herein, pixel position transformation on the local reference region 223a (which may be specifically, for example, four vertexes of a mark display frame corresponding to the local reference region 223a) pre-marked in the template image 202a, to obtain four mapped points corresponding to the four vertexes in the local reference region 223a. Further, a region in which the four mapped points are located may be collectively referred to as the local mapped region corresponding to the local reference region 223a.

The region size of the local reference region 223a marked in the template image 202a is d3 × d4, where d3 is the height of the local reference region 223a, and d4 is the width of the local reference region 223a. In some embodiments of this application, the local mapped region is a mapping region that is in the service image and that is obtained by performing pixel position transformation on the local reference region by using the foregoing pixel position transformation relationship 203a. Further, the determined local mapped region may be determined as a target positioned region 213a shown in FIG. 2. The region size (also referred to as the size) of the target positioned region 213a is consistent with the size of the local reference region 223a, that is, may be d3 × d4. Then, the computer device may perform operation S24: Determine a target positioned image 204a based on the target positioned region 213a, identify a foreground region of the target object in the target positioned image 204a, and perform fitting based on the foreground region to obtain an edge curve 214a.

The target positioned image 204a may be an image obtained by performing image cropping on the target positioned region 213a in the service image. This means that in this case, the size of the target positioned image may be d3 × d4. The foreground region identified by the computer device in the target positioned image 204a is a region corresponding to the target object. In addition, the edge curve 214a may be a curve obtained by performing curve fitting on edge pixels of the target object in the foreground region. For example, the curve obtained through fitting may be specifically an edge straight line, for example, the edge curve 214a shown in FIG. 2.

The image processing solution for finally obtaining the edge curve (for example, the edge straight line) provided in some embodiments of this application may specifically include the following three phases. For a first stage in the three stages, coarse positioning may be performed by using the template image in the first stage, so that in a coarse positioning process, a primary region of the target object (such as the industrial component) may be roughly positioned first, and then coarse position adjustment is performed on the primary region. In a second stage, the service image may be cropped by using a semantic segmentation algorithm to obtain a region at a position corresponding to a region (namely, the foregoing local reference region) in the template image (that is, the service image is cropped to obtain the target positioned region), to obtain the target positioned image. Further, semantic segmentation may be performed on the target positioned image, to distinguish a foreground and a background in the target positioned image, so that a pure edge curve may be obtained through fitting based on the distinguished foreground. In other words, in some embodiments of this application, after the service image is cropped to obtain the region at the position corresponding to the region in the template image, semantic segmentation may be performed on an image corresponding to the region obtained through cropping, to distinguish an accurate foreground region, and the edge pixels of the target object in the foreground region are used as a pure edge result (namely, the edge pixels) obtained through visual measurement in the industrial scenario. In a third stage, the curve fitting may be performed by using a curve fitting processing algorithm (for example, a random sample consensus (RANSAC) linear regression algorithm), to obtain the edge curve through fitting. According to the image processing solution in some embodiments of this application, the edge line of the target object (for example, the industrial component) in the industrial scenario may be accurately positioned through visual measurement. In this way, interference caused by component offset, illumination, stain, a defect, and the like can be excluded, and problems that an existing edge detection method has a large error and fails in a complex scenario can be resolved. In addition, in some embodiments of this application, when the foreground recognition is performed, because an image (namely, the target positioned image) corresponding to a local region of the target object is identified, processing duration thereof is far less than duration of performing a deep semantic segmentation operation by using a full-size large image. In this way, costs can be effectively reduced during the foreground recognition. Moreover, in some embodiments of this application, in a process of generating the edge curve by using the curve fitting processing method, a small quantity of parameters are needed. This means that a small quantity of edge pixels are actually needed in the target positioned image to implement the curve fitting. In this way, stability and accuracy of the edge curve that is finally obtained through fitting can be improved. In addition, the algorithm in this application is clear in logic, and is stable and controllable, and an operation result of each step may be viewed visually, to help quickly locate a problem when the algorithm operates abnormally. For example, a positioned image in the template image may be viewed (for example, an image that is of the template object 222a and that is positioned in the object detection region 221a may be viewed in the template image 202a). For another example, the initial positioned region determined in the service image may be viewed (for example, a coarsely positioned image of the target object 211a may be viewed in the service image 201a). For another example, the target positioned region in the service image may be viewed, the foreground region identified in the target positioned image corresponding to the target positioned region may be viewed, and the edge curve obtained through fitting by using the pixels in the foreground region may be viewed. In addition, accuracy of fitting between the edge curve generated in some embodiments of this application and a physical object is extremely high, so that an algorithmic measurement consistency error is stably less than two pixels, and a deviation from an actual value is stably less than four pixel values.

In some embodiments of this application, when the service image or the template image is obtained, a needed hardware environment may include an imaging platform, a camera (a photographing apparatus), a light source, a server for performing deep defect detection, a corresponding software environment, and the like. This is not limited herein. Hardware equipped on the server may be, for example, an Intel Xeon 8255C CPU (a version of a central processing unit) and an NVIDIA Tesla V100 video card (a version of a video card). In other words, the image processing solution in some embodiments of this application may be implemented on a server equipped with an Intel Xeon 8255C CPU (a version of a central processing unit) and an NVIDIA Tesla V100 video card (a version of a video card). A coding language related to the software environment may be selected according to an actual requirement. For example, Python 3.6.8 may be selected. A used framework may also be determined according to an actual requirement. For example, opencv-python (a framework type), numpy (a framework type), or scikit-learn (a framework type) may be used. This is not limited herein.

The embodiments of this application may be applied to a product measurement scenario (for example, a product quality detection scenario) in the industrial scenario. To be specific, an edge curve of a corresponding product (namely, the target object) to be quality detected may be quickly and stably determined by using the image processing method described in some embodiments of this application, so that product measurement in the product quality detection scenario may be accurately implemented based on the edge curve. If a measurement result (namely, a detection value) does not satisfy a requirement, it may indicate that the product is unqualified. It can be learned from this that the edge curve of the target object can be accurately obtained through fitting by using the image processing solution in some embodiments of this application, to improve accuracy of performing product measurement on the corresponding product in the product quality detection scenario, thereby helping improve efficiency of performing quality management on product quality. In some embodiments of this application, after the target positioned region is determined by using the pixel position transformation relationship, the local region concerned by a user (for example, a quality detector) in the industrial scenario may be quickly obtained through region cropping. In addition, because the size of the local region obtained through cropping is smaller, reasoning duration (namely, elapsed time for reasoning) consumed when the foreground recognition (for example, the semantic segmentation) is performed through deep learning is greatly reduced in comparison with directly identifying the entire service image. In addition, because the foreground recognition needs to be performed only on the local region, it means that in a process of obtaining, through training, a deep learning model used for identifying the local region in the service image, time complexity and video memory occupation for obtaining the deep learning model through training may also be reduced, thereby greatly improving availability of performing product quality detection on the product in the industrial scenario.

In some embodiments, some embodiments of this application may further be applied to some other scenarios in which an edge curve of a target object needs to be obtained through fitting. For example, in a special effect processing scenario, the image processing solution in some embodiments of this application may be applied to implement special effect processing on an object such as a person and/or an animal. For example, a target positioned region of the person and/or the animal may be determined in a service image according to some embodiments of this application, and an edge curve of the person and/or the animal may be obtained through fitting based on a foreground region in the target positioned region. For a same person (namely, a same target object), different target positioned regions may further be correspondingly determined in the service image based on different local reference regions pre-marked in a template image, and then a plurality of local regions of the target object may be obtained through cropping, so that in the plurality of local regions, an edge curve may be obtained through fitting by using edge pixels in each local region that belong to a foreground region (that is, belong to the target object), to help obtain a plurality of edge curves through fitting. In this way, in some embodiments of this application, in the special effect processing scenario, special effect processing may further be performed based on each of the plurality of edge curves obtained through fitting. For example, a corresponding light effect may be determined based on the edge curve, to implement special effect processing on the service image to which the target object belongs. In addition, because the edge curve is obtained through fitting based on the edge pixels in the local region of the target object, a quantity of parameters used for the curve fitting is small. Therefore, a calculation amount during the curve fitting is reduced to some extent, thereby improving efficiency of the edge curve fitting to some extent.

Some embodiments of this application may be applied to the field of artificial intelligence technologies. For example, deep learning may be performed by using an artificial intelligence technology, to obtain, through training, a deep learning network used for performing foreground recognition. For ease of understanding, in the embodiments of this application, the deep learning network used for performing foreground recognition may be collectively referred to as a foreground recognition network. Further, in the industrial scenario, a foreground region in a target positioned image (namely, a region corresponding to an identified foreground in the target positioned image) may be identified by using the foreground recognition network obtained through training.

Some embodiments of this application may further be applied to the field of cloud technologies. For example, a cloud server may be configured to perform the image processing solution provided in some embodiments of this application, to finally obtain an edge curve of a target object in a service image through fitting.

The foregoing application scenarios are merely examples, and do not constitute a limitation on application scenarios of the technical solutions provided in the embodiments of this application. The technical solutions of this application may also be applied to other scenarios. For example, a person of ordinary skill in the art may learn that, with evolution of a system architecture and emergence of a new service scenario, the technical solutions provided in the embodiments of this application are also applicable to similar technical problems.

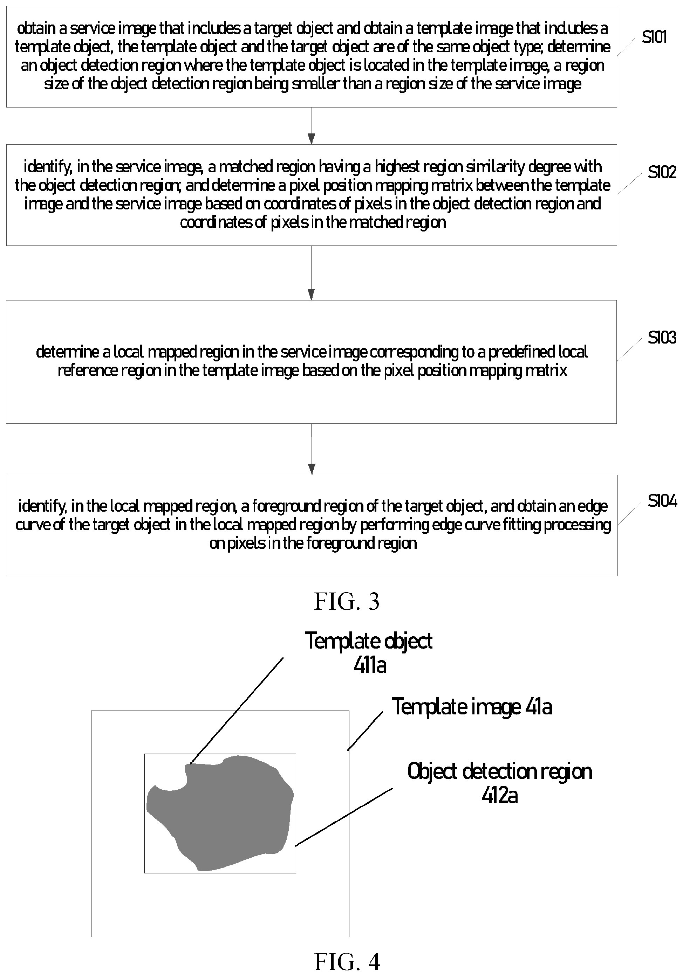

Further, refer to FIG. 3. FIG. 3 is a schematic flowchart of an image processing method according to various embodiments of this application. The method may be performed by a computer device. The method may include at least the following operation S101 to operation S104.

Operation S101: obtain a service image that includes a target object and obtain a template image that includes a template object, the template object and the target object are of the same object type; determine an object detection region where the template object is located in the template image, a region size of the object detection region being smaller than a region size of the service image. In some embodiments, obtain a service image including a target object, obtain a template image used for assisting in positioning the target object, and determine, from the template image, an object detection region corresponding to a template object.

The template object is an object that exists in the template image and that has a same object type as the target object, and the region size of the object detection region is smaller than the region size of the service image.

The target object may be an object on which edge detection is to be performed. The target object may be a physical object, a person, an animal, or the like. This is not limited herein. For example, the target object may be an industrial product or a part (namely, an industrial component) in an industrial scenario.

The service image may be a to-be-processed image that is photographed (that is, captured) and that includes the target object. This means that the service image includes the target object on which the edge detection is to be performed. In other words, the service image may be an image obtained by performing image capture on the target object. The target object included in the service image may be a complete object (for example, a complete industrial product), or may be a partial object in an object (for example, a part in a complete industrial product). This is not limited herein.

The template image may be a positioning reference image used for assisting in positioning the target object. The positioning reference image may be a used image that can assist in positioning an approximate position of the target object when positioning detection is performed on the target object included in the service image. In other words, in some embodiments of this application, a position of the target object in the service image may be approximately positioned by using the template image. The template image includes the template object, and the object type of the template object is consistent with the object type of the target object. In other words, when the positioning detection is performed on the target object in the service image, the template image corresponding to the template object that belongs to the object type the same as that of the target object needs to be obtained for positioning. For example, the object type may be a part type, a product type, or a physical-object type of the object. This is not limited herein. For example, if the target object is a part corresponding to a part type A, the template object may be an object corresponding to the same part type (for example, the template object may be another part corresponding to the part type A). Therefore, when obtaining the service image including the target object, the computer device needs to obtain the template image used for assisting in positioning the target object, that is, needs to use an image including the template object corresponding to the part type A as the template image, to assist in positioning, by using the template image, the target object included in the service image. The template image is used for assisting in positioning the target object, so that an initial positioned region that is of the target object and that matches the object detection region in the template image can be more quickly determined, and further, a pixel position transformation relationship between a pixel in the initial positioned region in the service image and a pixel in the object detection region in the template image may be constructed. In this way, when a mark display frame that is pre-marked by a user (for example, a quality detector in the industrial scenario) and on which edge detection needs to be emphatically performed exists in the template image, a region corresponding to the mark display frame in the template image may be referred to as a local reference region. Further, a local region (namely, a target positioned region) on which image processing (for example, foreground recognition and curve fitting) needs to be performed in the target object may be quickly and accurately positioned in the service image by using the local reference region and the pixel position transformation relationship.

The object detection region may be a region in which the template object included in the template image is located. The object detection region may be used for matching the service image, to assist in positioning a region in which the target object is located. The object detection region may include the complete template object, but does not include too much background content. The template object and the target object are objects having the same object type (for example, the same part type). Therefore, in an implementation, the template object included in the object detection region may be an object matching the target object (for example, the template object and the target object may be a same industrial part, or may be different industrial parts of the same part type). As a result, the region in which the template object is located and that is determined from the template image may be referred to as the object detection region. Specifically, the computer device may determine, in the template image, a positioning display frame used for positioning the template object. The positioning display frame herein may be an object detection frame associated with the template object. Therefore, a position of the object detection frame in the template image may be determined as the object detection region. In some embodiments of this application, the object detection frame may represent a region in which a main body of the template object positioned in the template image is located.

The object detection frame may be a rectangular frame used for box-selecting the template object (which may be specifically the main body of the template object). The object detection frame may be obtained through manual box-selection, or may be automatically obtained based on a target detection algorithm or the like. This is not limited herein. The object detection frame associated with the template object may have been determined when the template image is obtained, or may be determined after the template image is obtained, and then a position of the object detection frame is determined as the object detection region. In other words, the object detection region may also be understood as a region determined based on the template object in the template image.

In some embodiments, one template image may include a plurality of objects. Further, an object having an object type the same as that of the target object is determined from the plurality of objects included in the template image as the template object, and the object detection frame of the template object is determined, so that a region in which the currently determined object detection frame of the template object is located (namely, the foregoing position of the object detection frame) may be determined as the object detection region. For example, when a template image includes coarse template regions corresponding to parts of a plurality of part types of a product, and the object type of the target object is a part type 1, a part of the part type 1 in the template image may be determined as the template object, and an object detection frame completely including the target object may be further determined through positioning in a coarse template region of the template object, so that a position of the object detection frame may be determined as the object detection region.

The region size of the object detection region is smaller than the region size of the service image, so that the service image may be subsequently searched for the region matching the object detection region. The region size (which may also be referred to as the size for short) is a size determined by using counted quantities of pixels as the length unit and the width unit. For example, the region size of a rectangular region is a quantity of pixels that corresponds to the length of the rectangular region and a quantity of pixels that corresponds to the width of the rectangular region.

For example, refer to FIG. 4. FIG. 4 is a schematic diagram of a template image according to some embodiments of this application. As shown in FIG. 4, the template image 41a may include a template object 411a and an object detection region 412a determined based on the template object 411a. It can be learned that the object detection region 412a may completely include the template object 411a, and does not include an excessively large background region. That is, the object detection region 412a is determined by using an object detection frame that is obtained through positioning detection in the template image 41a and that completely represents a main position of the template object 411a. The background region herein is a region that is in the image (for example, the template image) and in which an object (for example, a non-main object) other than the main body of the object (for example, the template object) is located.

Specifically, in some implementations, if the template image includes a plurality of objects, and the plurality of objects herein may specifically include the template object that is selected from the template image and that is used for assisting in positioning the target object, specifically, in the object detection region 412a shown in FIG. 4, a region (for example, a grayscale region shown in FIG. 4) in which a main body of the template object 411a is located may be referred to as a foreground region. Therefore, a region (for example, a blank region or a white region shown in FIG. 4), in the object detection region 412a, other than the region (for example, the grayscale region shown in FIG. 4) in which the main body of the template object 411a is located may be referred to as the background region.

Usually, image capture of the template image and image capture of the service image are performed in a same image capture environment. Specifically, a photographing apparatus that captures the template image and a photographing apparatus that captures the service image may be a same photographing apparatus. In some embodiments, the photographing apparatus that captures the template image and the photographing apparatus that captures the service image may alternatively be different photographing apparatuses. However, to ensure accuracy of assisting in positioning the service object in the service image by using the template object in the template image, it is proposed in some embodiments of this application that the photographing apparatus configured to capture the template image and the photographing apparatus configured to capture the service image may have a same setting parameter. For example, a distance between the template object and the photographing apparatus may be set to remain consistent with a distance between the target object and the photographing apparatus, to ensure that the resolution of the captured template image may be consistent with the resolution of the service image. In this way, the size of the template object presented in the template image may be basically consistent with the size of the target object presented in the service image (for example, there may be a slight difference between the sizes of the objects because positions of the objects are different, but the difference may be ignored herein because only coarse positioning is performed). In some industrial scenarios, to improve accuracy of performing product measurement (for example, edge detection in a product quality detection scenario) on an industrial product, in some embodiments of this application, when image capture is performed on the industrial product (for example, the target object) to obtain the service image, a photographing apparatus having less distortion and high definition may be used for image capture, to obtain a service image that is more accurate and that completely includes the target object. Further, after an accurate edge curve of the target object is obtained through fitting, the industrial product may be more accurately detected based on the edge curve.

In some cases, the sizes of the template image and the service image may be different. Therefore, the template image may be first zoomed when the object detection region used for assisting in positioning the target object is determined in the template image, to obtain a zoomed template image. The size of the zoomed template image is consistent with the size of the currently obtained service image of the target object. Then, in some embodiments of this application, the object detection region used for assisting in positioning the target object may be quickly determined based on the zoomed template image, so that the region size of the object detection region determined in the zoomed template image may be smaller than the region size of the entire service image, to help subsequently search the service image for the region matching the object detection region.

Specifically, in some embodiments of this application, the template image may be zoomed to obtain zoomed template images of different sizes, and then template object regions (the template object regions herein may be regions in which the template object are located and that are preliminarily positioned in the corresponding zoomed template images) of different sizes may be quickly positioned in the zoomed template images of different sizes, so that matching may be subsequently performed in the service image based on the template object regions of different sizes, to determine, in the service image, matching regions that match these template object regions of different sizes (the matching regions herein are regions found in the service image that match the template object regions of different sizes). In this way, the object detection region used for assisting in positioning the target object may be accurately determined subsequently based on largest region similarities between the determined matching regions and the template object regions of the corresponding sizes. In other words, in some embodiments of this application, the service image may be separately searched, by using the template object regions of different sizes, for a matching region having a largest region similarity with the template object region of each size, and the largest region similarity corresponding to the template object region of each size is recorded, so that a target largest region similarity may be determined from the largest region similarities corresponding to the template object regions of all the sizes, to determine a template object region corresponding to the target largest region similarity as the object detection region. In addition, a found matching region that is in the service image and that has the target largest region similarity with the object detection region may be determined as the region matching the object detection region. When the template image is zoomed, if the template image needs to be zoomed out, pixel sampling may be performed according to a zoomed-out image size; or if the template image needs to be zoomed in, pixel interpolation may be performed according to a zoomed-in image size.

In some embodiments, the template image and the service image may further include a same reference object, and the reference object may be used as an object that needs to be referenced when the template image is zoomed. In other words, when the template image is captured, both the template object and the reference object are photographed. In this way, the captured template image may include both the template object and the reference object. Similarly, when the service image is captured, both the target object and the reference object are photographed. In this way, the captured service image may also include the to-be-detected target object and the reference object used for zooming the template image. In other words, the size of the reference object in the zoomed template image may be the same as that of the reference object in the service image. Specifically, in some embodiments of this application, when the template image is zoomed, the region size of a region in which the reference object in the zoomed template image is located may remain consistent with the region size of a region in which the reference object in the service image is located. Further, in the zoomed template image, a region in which a positioned object detection frame of the template object is located may be determined as the object detection region.

Operation S102: identify, in the service image, a matched region having a highest region similarity degree with the object detection region; and determine a pixel position mapping matrix between the template image and the service image based on coordinates of pixels in the object detection region and coordinates of pixels in the matched region. In some embodiments, search the service image for the region matching the object detection region, determine the found region as the initial positioned region (i.e., matched region) of the target object, and determine the pixel position transformation relationship (or pixel position mapping matrix) based on a pixel position of the pixel in the object detection region and a pixel position of the pixel in the initial positioned region.

The initial positioned region is the region that is found in the service image and that matches the object detection region. For example, the region matching the object detection region herein may be specifically a matching region that is found in the service image through region pixel matching and that has a largest region similarity with the object detection region.

In a process of searching the service image for the region matching the object detection region, a sliding window whose size is consistent with the region size of the object detection region may be preferentially determined in the service image through the region pixel matching. For example, in some embodiments of this application, the sliding window may be continuously slid in the service image through the region pixel matching by using a window sliding method, and a region similarity between a region in which the sliding window is located and the object detection region when the sliding window is slid to each position is calculated. Further, a region in which the sliding window is located and that corresponds to the largest region similarity in obtained region similarities may be determined as the region matching the object detection region.

In some embodiments, to identify the matched region, a sliding window in the service image is identified based on the region size of the object detection region, one or more window positions of the sliding window in the service image are determined as one or more to-be-matched regions in the service image, where the region size of the one or more to-be-matched regions is consistent with the region size of the object detection region. In some embodiments, one or more corresponding region similarity degrees between the one or more to-be-matched regions and the object detection region are determined based on a pixel value of each pixel in each to-be-matched region and a pixel value of each pixel in the object detection region. One of the one or more to-be-matched regions in the service image are determined as the matched region based on the one or more region similarity degrees.

Specifically, in some embodiments of this application, the specific process of searching the service image for the region matching the object detection region may be described as the following operations: The computer device may determine, in the service image based on the region size of the object detection region, the sliding window used for window sliding, and further determine, in the service image, a window position of the sliding window as a to-be-matched region in the service image, where the region size of the to-be-matched region herein is consistent with the region size of the object detection region. Then, the computer device may determine a region similarity between the to-be-matched region and the object detection region by using a pixel value of each pixel in the to-be-matched region and the pixel value of each pixel in the object detection region. Further, the computer device may determine, in the service image based on the region similarity, the region matching the object detection region.

The sliding window is a window that has the same region size as the object detection region and that is pre-determined when the window sliding is performed in the service image by using the window sliding method. The size of the sliding window is consistent with the region size of the object detection region. In this way, the initial positioned region including the complete target object may be preliminarily positioned in a process of performing window sliding by using a sliding frame. The to-be-matched region is a region corresponding to the window position of the sliding window. Because the size of the sliding window is consistent with the region size of the object detection region, the region size of the to-be-matched region should also be consistent with the region size of the object detection region. The sliding window may be slid to different window positions in the service image. In a sliding process of the sliding window, a region corresponding to each window position to which the sliding window is slid may be referred to as the to-be-matched region.

The region similarity is a similarity between the to-be-matched region and the object detection region that is calculated through the region pixel matching. The region pixel matching herein is specifically determining the region similarity between the to-be-matched region and the object detection region according to the pixel value of each pixel in the to-be-matched region and the pixel value of each pixel in the object detection region. Specifically, when the region size of the object detection region is smaller than the region size of the service image, different window positions to which the sliding window is slid may be obtained in the service image through window sliding. Therefore, in some embodiments of this application, in the sliding process of the sliding window, a similarity between the object detection region and a region (namely, each of different to-be-matched regions) corresponding to each window position to which the sliding window is slid may be calculated. Further, the similarity between the region corresponding to each window position and the object detection region may be collectively referred to as the region similarity between the to-be-matched region and the object detection region. For example, a calculated similarity between a region (namely, a to-be-matched region) corresponding to a window position 1 and the object detection region may be a similarity 1, and a calculated similarity between a region (namely, another to-be-matched region) corresponding to a window position 2 and the object detection region may be a similarity 2. The calculated similarity 1 and similarity 2 may be collectively referred to as region similarities herein.

In some embodiments of this application, the region matching the object detection region may be determined in the service image based on the region similarity. For example, a to-be-matched region (for example, the region corresponding to the window position 1) having the largest region similarity with the object detection region may be determined as the region matching the object detection region.

Specifically, the to-be-matched region herein may include a first sliding window region and a second sliding window region. The first sliding window region may be a region determined when the sliding window is slid to a first window position. Similarly, the second sliding window region may be a region determined when the sliding window is slid to a second window position. The second window position herein is a window position that is next to the first window position and that is determined after the window sliding is performed on the sliding window according to a sliding step length (in other words, the window sliding may be performed on the sliding window at the first window position according to the sliding step length when the window position corresponding to the sliding window is the first window position, and a window position of the sliding window after the window is slid may be referred to as the second window position. In other words, in this case, the second window position is a window position next to the first window position). In this case, in some embodiments of this application, a specific implementation of determining the region similarity between the to-be-matched region and the object detection region by using the pixel value of each pixel in the to-be-matched region and the pixel value of each pixel in the object detection region may be described as the following operations: For example, specifically, in some embodiments of this application, a region similarity between the first sliding window region and the object detection region may be determined by using a pixel value of each pixel in the first sliding window region and the pixel value of each pixel in the object detection region, and the region similarity between the first sliding window region and the object detection region is determined as a first region similarity. Further, in some embodiments of this application, a region similarity between the second sliding window region and the object detection region may be determined by using a pixel value of each pixel in the second sliding window region and the pixel value of each pixel in the object detection region, and the region similarity between the second sliding window region and the object detection region is determined as a second region similarity. Then, in some embodiments of this application, the region similarity between the to-be-matched region and the object detection region may be determined based on the first region similarity and the second region similarity.

The window sliding may be performed on the sliding window at a particular step length (also referred to as a sliding step length) in the service image, until the service image is traversed through sliding (also referred to as that traversing through sliding ends). The step length is a quantity of pixels by which the sliding window needs to move each time the sliding window is slid to a next window position. For example, the step length may be one pixel or two pixels. Usually, to improve accuracy of the determined region matching the object detection region, the step length may be set to one pixel, so that the sliding window may be slid to all possible positions in the service image, thereby more precisely matching the position of the target object.

In some implementations, if efficiency of determining the region matching the object detection region needs to be further improved, the step length may be set to a larger quantity of pixels, to reduce a quantity of window positions participating in region similarity calculation. In this way, a quantity of times of region similarity calculation that needs to be performed may be reduced to some extent, thereby improving efficiency of preliminarily positioning the initial positioned region of the target object in the service image through the region pixel matching. When the window sliding is performed on the sliding window in the service image, the sliding may be performed in a particular sliding sequence. For example, the sliding sequence may be sliding in the service image in an up-to-down sliding direction or a left-to-right sliding direction. A specific sliding direction of the sliding window is not limited herein. For example, when the sliding step length is one pixel, an upper left point of the sliding window may be first aligned (for example, overlapped) with an upper left point of the service image in the service image, to determine a sliding window whose size is consistent with the region size of the object detection region. Then, the sliding window may be sequentially slid to traverse the service image in the left-to-right sliding direction according to the sliding step length of one pixel. When one time of left-to-right traversing through sliding is implemented in the sliding direction, the sliding window may be slid downwards by one pixel according to the sliding step length, and then is sequentially slid again to traverse the service image in the left-to-right sliding direction according to the sliding step length of one pixel, until another time of left-to-right traversing through sliding is implemented in the sliding direction. By analogy, when the sliding window is slid in the service image in the left-to-right sliding sequence to traverse the entire service image, traversing in the service image through sliding ends. For example, when a lower right point of the sliding window is aligned with a lower right point of the service image, it may be determined that sliding in the entire service image is completed (that is, it is determined that the entire service image is completely traversed through sliding). Therefore, the traversing in the service image through sliding may end. That the service image is completely traversed through sliding means: When the window sliding is performed on the sliding window in the sliding sequence according to the sliding step length, the sliding window is slid to a last window position, and a lower right point that is of the sliding window and that corresponds to the last window position is aligned (for example, overlapped) with the lower right point of the service image.

The first sliding window region is different from the second sliding window region. The first sliding window region is a to-be-matched region determined when the sliding window is slid to the first window position, and the second sliding window region is a to-be-matched region determined when the sliding window is slid to the second window position. The first window position is different from the second window position. In an implementation, the first window position may be specifically an initial window position (for example, the 1st window position) in the window positions to which the sliding window is slid in the service image, and the second sliding window region may be specifically a window position next to the initial window position (for example, a window position next to the first window position) in the window positions to which the sliding window is slid. In another implementation, the first window position may be specifically a non-initial window position (for example, a window position next to the foregoing initial window position) in the window positions to which the sliding window is slid in the service image, and the second sliding window region may be specifically a window position next to the non-initial window position in the window positions to which the sliding window is slid. The first window position and the second window position are not specifically limited herein.

The first region similarity is the region similarity between the first sliding window region and the object detection region. The second region similarity is the region similarity between the second sliding window region and the object detection region.

In an implementation, if it is determined, when the sliding window is slid to the second window position, that the sliding window completely traverses the service image through sliding, a specific operation of determining the region similarity between the to-be-matched region and the object detection region based on the first region similarity and the second region similarity in some embodiments of this application may be described as: determining the first region similarity and the second region similarity as the region similarity between the to-be-matched region and the object detection region.

In some embodiments, if it is determined, when the sliding window is slid to the second window position, that the sliding window does not complete traversing the service image through sliding, in some embodiments of this application, a specific process of determining the region similarity between the to-be-matched region and the object detection region based on the first region similarity and the second region similarity may be alternatively described as: sliding the sliding window from the second window position to a window position next to the second window position according to the sliding step length, and determining, as a third sliding window region, a region corresponding to the window position that is next to the second window position and to which the sliding window is currently slid, so that a region similarity between the third sliding window region and the object detection region may be further determined by using a pixel value of each pixel in the third sliding window region and the pixel value of each pixel in the object detection region, to determine the region similarity between the third sliding window region and the object detection region as a third region similarity, thereby determining the region similarity between the to-be-matched region and the object detection region based on the first region similarity, the second region similarity, and the third region similarity.

For example, in some embodiments of this application, a current window position (namely, the second window position) of the sliding window may be used as a new first window position, so that the sliding window may be slid from the new first window position (namely, the second window position) to a new second window position (that is, the new second window position is essentially a window position next to the second window position, for example, a third window position) according to the sliding step length. For ease of distinction, in some embodiments of this application, a region corresponding to the new second window position (namely, the window position next to the second window position, for example, the third window position) to which the sliding window is currently slid in the service image may be determined as the third sliding window region. In this way, in some embodiments of this application, the region similarity between the third sliding window region and the object detection region may be further determined by using the pixel value of each pixel in the third sliding window region and the pixel value of each pixel in the object detection region, to determine the region similarity between the third sliding window region and the object detection region as the third region similarity. Then, in some embodiments of this application, the region similarity between the to-be-matched region and the object detection region may be determined based on the first region similarity, the second region similarity, and the third region similarity.

In another implementation, for any two sliding window regions (namely, the foregoing first sliding window region and second sliding window region) associated with the sliding window, because the region similarity between the first sliding window region and the object detection region is the first region similarity, and the region similarity between the second sliding window region and the object detection region is the second region similarity, a specific process of determining the region similarity between the to-be-matched region and the object detection region based on the first region similarity, the second region similarity, and the third region similarity in some embodiments of this application may be described as: The first region similarity is first compared with the second region similarity to obtain a first comparison result. A larger region similarity determined in the first region similarity and the second region similarity is used as a candidate target region similarity based on the first comparison result. Then, the candidate target region similarity may be compared with the third region similarity to obtain a second comparison result. A larger region similarity determined in the candidate target region similarity and the third region similarity is used as a target region similarity based on the second comparison result. Further, a to-be-matched region corresponding to the target region similarity may be determined as the region matching the object detection region.

In some embodiments of this application, when a plurality of to-be-matched regions are determined in the service image through window sliding, region similarities of any two adjacent to-be-matched regions may further be compared in pairs, so that a region similarity having a larger value in the region similarities of the any two adjacent to-be-matched regions may be used as a candidate target region similarity, to use, as the target region similarity in these determined candidate target region similarities, a candidate target region similarity finally having a largest value.

After the region similarity corresponding to the second sliding window region is calculated, the sliding window may be slid to a next window position according to the sliding step length, and a region similarity corresponding to a to-be-matched region at the next window position is calculated, until the sliding window completely traverses the service image through sliding. In this way, in the sliding process of the sliding window, a region similarity between a to-be-matched region corresponding to each window position to which the sliding window is slid and the object detection region may be recorded, so that a finally obtained region similarity having a largest value in these region similarities may be used as a target region similarity, to determine, in the service image, a region corresponding to the target region similarity as the region matching the object detection region.

Specifically, in some embodiments of this application, the target region similarity may be determined based on the first region similarity and the second region similarity. The target region similarity herein is a region similarity that is determined in the first region similarity and the second region similarity and that has a larger value. In other words, the target region similarity may be a larger region similarity in the first region similarity and the second region similarity. In this way, in some embodiments of this application, the region matching the object detection region may be determined in the service image based on a to-be-matched region corresponding to the target region similarity.

The target region similarity is a larger region similarity in the first region similarity and the second region similarity. In other words, the region matching the object detection region is a target matching region determined from the obtained to-be-matched regions in the process of performing window sliding on the sliding window. The target region similarity is a region similarity that has a largest value and that is finally determined from the recorded region similarities of the to-be-matched regions.

When there are a larger quantity of region similarities (for example, more than two region similarities), a region similarity having a largest value may be determined from the region similarities of all the to-be-matched regions as the target region similarity. For example, if the region similarities of all the to-be-matched regions include the first region similarity, the second region similarity, and the third region similarity, a largest region similarity determined in the first region similarity, the second region similarity, and the third region similarity may be determined as the target region similarity.

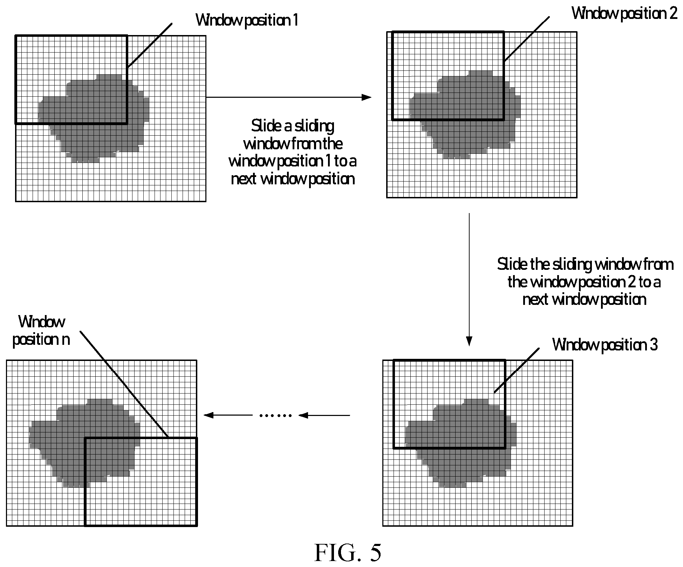

For example, refer to FIG. 5. FIG. 5 is a schematic diagram of a scenario of window sliding according to some embodiments of this application. As shown in FIG. 5, when the sliding window is located at a window position 1, the window position 1 may be determined as the first window position, and a region in which the window position 1 is located in the service image is determined as a first window sliding region, so that a region similarity 1 corresponding to the window position 1 may be determined (that is, a region similarity between a to-be-matched region in which the window position 1 is located and the object detection region may be calculated). Further, in some embodiments of this application, the sliding window may be slid from the window position 1 to a next window position (namely, a window position 2 shown in FIG. 5) in a sliding direction (for example, a left-to-right sliding sequence) according to a preset sliding step length (for example, a step length of one pixel).

For example, as shown in FIG. 5, after the sliding window is slid rightwards by one pixel, a current window position of the sliding window may be displayed at the window position 2 shown in FIG. 5. Therefore, the window position 2 may be determined as the foregoing second window position (namely, the window position next to the first window position). In this case, a region in which the window position 2 is located is a second window sliding region, so that a region similarity 2 between a to-be-matched region (namely, the second window sliding region) corresponding to the window position 2 and the object detection region may be determined (that is, calculated) through the region pixel matching.

Further, as shown in FIG. 5, the sliding window may further be slid from the window position 2 to a next window position (namely, a window position 3 shown in FIG. 5). For example, as shown in FIG. 5, after the sliding window continues to be slid rightwards by one pixel, the current window position of the sliding window may be displayed at the window position 3 shown in FIG. 5. In this case, a region in which the window position 3 is located is a third window sliding region, so that a region similarity 3 between a to-be-matched region (namely, the third window sliding region) corresponding to the window position 3 and the object detection region may be further determined (that is, calculated) through the region pixel matching. Further, the rest can be deduced by analogy, until the sliding window completes traversing the service image through sliding (that is, as shown in FIG. 5, until the current window position of the sliding window is displayed at a window location n). Further, region similarities (for example, the region similarity 1, the region similarity 2, and the region similarity 3) of to-be-matched regions corresponding to all window positions may be recorded in an entire sliding process of the sliding window, so that when a largest region similarity in the region similarities (for example, the region similarity 1, the region similarity 2, and the region similarity 3) of the to-be-matched regions corresponding to the window positions is determined as a target region similarity, a to-be-matched region corresponding to the target region similarity may be determined as the region matching the object detection region. In other words, in some embodiments of this application, the to-be-matched region corresponding to the largest region similarity in the to-be-matched regions in which all the window positions are located may be determined as the region matching the object detection region.

For ease of understanding, in some embodiments of this application, a specific process of determining the region similarity between the to-be-matched region and the object detection region through the region pixel matching is described by using one to-be-matched region as an example. That is, in some embodiments of this application, for any to-be-matched region, a region similarity between the to-be-matched region and the object detection region may be specifically determined by using a pixel value of each pixel in the to-be-matched region and the pixel value of each pixel in the object detection region.

For example, in some embodiments of this application, the region similarity between the to-be-matched region and the object detection region may be determined based on a pixel difference between each pixel in the to-be-matched region and a pixel on a same pixel coordinate in the object detection region. In other words, in some embodiments of this application, an average of a pixel difference between two pixels on a same pixel coordinate may be calculated based on a pixel difference between each pixel in the to-be-matched region and a pixel on a same pixel coordinate in the object detection region. Further, the region similarity between the to-be-matched region and the object detection region may be determined according to the calculated average of the pixel difference. The pixel difference may be a difference between pixel values of two pixel points on a same pixel coordinate. A larger average of a pixel difference between pixels on each pixel coordinate indicates a smaller region similarity. Otherwise, a smaller average of a pixel difference between pixels on each pixel coordinate indicates a larger region similarity.

The pixel coordinate herein is a pixel position corresponding to a row and column in which a pixel is located in a region (for example, the to-be-matched region or the object detection region). For example, in the to-be-matched region, a pixel coordinate of a pixel whose pixel position is the 1st row and 2nd column may be represented as (1, 2).

In one or more implementations, for any to-be-matched region (for example, the foregoing first sliding window region or second sliding window region), the determining a region similarity between the to-be-matched region and the object detection region by using a pixel value of each pixel in the to-be-matched region and the pixel value of each pixel in the object detection region may further specifically include: The computer device may determine, based on a pixel difference between a pixel value of each pixel in the to-be-matched region and a pixel average of the to-be-matched region (for example, an average calculated based on the pixel value of each pixel in the to-be-matched region), a pixel average difference corresponding to each pixel in the to-be-matched region. Further, the computer device may determine, based on a pixel difference between the pixel value of each pixel in the object detection region and a pixel average of the object detection region (for example, another average calculated based on the pixel value of each pixel in the object detection region), a pixel average difference corresponding to each pixel in the object detection region. Further, the computer device may determine a region similarity between the to-be-matched region and the object detection region based on the pixel average difference corresponding to each pixel in the to-be-matched region and the pixel average difference corresponding to the pixel on a same pixel coordinate in the object detection region.

The pixel average (also referred to as a pixel average value) of the to-be-matched region is an average obtained by performing average calculation on the pixel values of all the pixels in the to-be-matched region. Similarly, the pixel average (also referred to as a pixel average value) of the object detection region is another average obtained by performing average calculation on the pixel values of all the pixels in the object detection region. In addition, the pixel average difference corresponding to each pixel herein is a difference between a pixel value of each pixel in a specific region (for example, the object detection region or the to-be-matched region) and a pixel average of the region.

For example, in some embodiments of this application, in a process of determining the region similarity between the to-be-matched region and the object detection region based on the pixel average difference corresponding to each pixel in the to-be-matched region and the pixel average difference corresponding to the pixel on the same pixel coordinate in the object detection region, a pixel standard deviation (or variance) associated with the pixel value of the pixel in the to-be-matched region may be first obtained, and then a pixel standard deviation (or variance) associated with the pixel value of the pixel in the object detection region is obtained, so that the region similarity between the to-be-matched region and the object detection region may be determined based on the pixel average difference corresponding to each pixel in the to-be-matched region, the pixel average difference corresponding to the pixel on the same pixel coordinate in the object detection region, the pixel standard deviation (or variance) associated with the pixel value of the pixel in the to-be-matched region, and the pixel standard deviation (or variance) associated with the pixel value of the pixel in the object detection region. The pixel standard deviation (or variance) is a variance obtained by performing standard deviation calculation on a pixel value of a pixel in a specific region (for example, the to-be-matched region or the object detection region). For example, in some embodiments of this application, the standard deviation calculation may be performed on the pixel value of each pixel in the to-be-matched region, to calculate a variance of the pixel in the to-be-matched region. Similarly, in some embodiments of this application, the standard deviation calculation may also be performed on the pixel value of each pixel in the object detection region, to calculate a variance of the pixel in the object detection region.

For example, for determining the region similarity between the to-be-matched region and the object detection region through the region pixel matching, refer to the following formula (1):

$$\text{Sim} = \frac{1}{m}\sum_{x,y}\frac{(p(x,y)-\mu_f)(q(x,y)-\mu_t)}{\sigma_f\sigma_t} \qquad \text{formula (1)}$$

In the formula (1), Sim may represent the region similarity between the to-be-matched region (for example, a to-be-matched region p) and the object detection region (for example, an object detection region q). In the formula (1), p may represent the to-be-matched region. Similarly, q may represent the object detection region, where p(x, y) represents a pixel value of a pixel on a specific pixel coordinate (for example, a pixel position corresponding to a pixel on an $x^{th}$ row and a $y^{th}$ column) in the to-be-matched region (for example, the to-be-matched region p), and q(x, y) represents a pixel value of another pixel on the same pixel coordinate (for example, a pixel position corresponding to another pixel on the $x^{th}$ row and $y^{th}$ column) in the object detection region (for example, the object detection region q). $\mu_f$ represents the pixel average of the to-be-matched region, and $\mu_t$ represents the pixel average of the object detection region. Similarly, $\sigma_f$ is the pixel standard deviation that is of the to-be-matched region and that is obtained by performing standard deviation calculation on the pixel value of the pixel in the to-be-matched region, and $\sigma_t$ is the pixel standard deviation that is of the object detection region and that is obtained by performing standard deviation calculation on the pixel value of the pixel in the object detection region. In addition, in the formula (1), $m^{-1}$ is a hyper-parameter, and may be used as a zooming factor.

For ease of understanding, one to-be-matched region is used as an example herein. The to-be-matched region may be the foregoing first sliding window region. In this case, the first sliding window region includes an $i^{th}$ pixel, and the object detection region includes a $j^{th}$ pixel, where i and j are positive integers that are consistent with each other; and a pixel position of the $i^{th}$ pixel in the first sliding window region is consistent with a pixel position of the $j^{th}$ pixel in the object detection region. Based on this, a specific process in which the computer device determines the region similarity between the first sliding window region and the object detection region by using the pixel value of each pixel in the first sliding window region and the pixel value of each pixel in the object detection region may be described as: The computer device may determine, as a first pixel average of the first sliding window region, an average obtained by performing average calculation on the pixel values of the pixels in the first sliding window region. Further, the computer device may determine, as a second pixel average of the object detection region, the average obtained by performing average calculation on the pixel values of the pixels in the object detection region. Further, the computer device may determine a difference between a pixel value of the $i^{th}$ pixel in the first sliding window region and the first pixel average as a first difference corresponding to the $i^{th}$ pixel, and determine a difference between a pixel value of the $j^{th}$ pixel in the object detection region and the second pixel average as a second difference corresponding to the $j^{th}$ pixel. Further, the computer device may determine the region similarity between the first sliding window region and the object detection region based on the first difference corresponding to the $i^{th}$ pixel and the second difference corresponding to the $j^{th}$ pixel.

The $i^{th}$ pixel may be any pixel in the first sliding window region. For example, if the size (namely, the region size) of the first sliding window region is W × E (that is, the first sliding window region may specifically include pixels in W rows × E columns), according to the foregoing formula (1), the $i^{th}$ pixel may be an $i^{th}$ pixel in the $x^{th}$ row and $y^{th}$ column in the to-be-matched region p. For example, the $i^{th}$ pixel may be a pixel in the $1^{st}$ row and $1^{st}$ column, a pixel in the $1^{st}$ row and $2^{nd}$ column, ..., or a pixel in a $W^{th}$ row and an $E^{th}$ column in the first sliding window region. Similarly, the $j^{th}$ pixel may be any pixel in the object detection region. For example, the size (namely, the region size) of the object detection region is W × E (that is, the object detection region may specifically include pixels in W rows × E columns). According to the foregoing formula (1), the $j^{th}$ pixel may be a $j^{th}$ (j = i herein) pixel in the $x^{th}$ row and $y^{th}$ column in the foregoing object detection region q. For example, the $j^{th}$ pixel may be a pixel in the $1^{st}$ row and $1^{st}$ column, a pixel in the $1^{st}$ row and $2^{nd}$ column, ..., or a pixel in the $W^{th}$ row and the $E^{th}$ column in the object detection region.

The first pixel average is an average obtained by performing average calculation on the pixel values of the pixels in the first sliding window region. The second pixel average is an average obtained by performing average calculation on the pixel values of the pixels in the object detection region. In addition, the first difference is a difference between the pixel value of the $i^{th}$ pixel in the first sliding window region and the first pixel average. Similarly, the second difference is a difference between the pixel value of the $j^{th}$ pixel in the object detection region and the second pixel average.

In some embodiments of this application, for a specific process of determining the region similarity between the first sliding window region and the object detection region based on the first difference corresponding to the $i^{th}$ pixel and the second difference corresponding to the $j^{th}$ pixel, refer to the foregoing formula (1) for calculation. For example, the pixel value of the $i^{th}$ pixel in the first sliding window region may be p(x, y) in the formula (1). Similarly, a pixel coordinate of the $j^{th}$ pixel in the object detection region is q(x, y) in the formula (1). In addition, (p(x, y) - $\mu_f$) in the formula (1) may be the first difference corresponding to the $i^{th}$ pixel. Similarly, (q(x, y) - $\mu_t$) in the formula (1) may be the second difference corresponding to the $j^{th}$ pixel.

In some embodiments of this application, for a specific implementation method for determining the region similarity between the second sliding window region and the object detection region through the region pixel matching indicated by the foregoing formula (1), refer to related descriptions of the determining the region similarity between the first sliding window region and the object detection region through the region pixel matching. Details are not described herein.

For example, specifically, the second sliding window region includes an $e^{th}$ pixel, and the object detection region includes the $j^{th}$ pixel, where e and j are positive integers that are consistent with each other; and a pixel position of the $e^{th}$ pixel in the second sliding window region is consistent with the pixel position of the $j^{th}$ pixel in the object detection region. In this case, a specific process in which the computer device determines the region similarity between the second sliding window region and the object detection region by using the pixel value of each pixel in the second sliding window region and the pixel value of each pixel in the object detection region may be described as: The computer device may determine, as a third pixel average of the second sliding window region, an average obtained by performing average calculation on the pixel values of the pixels in the second sliding window region, and determine, as the second pixel average, the average obtained by performing average calculation on the pixel values of the pixels in the object detection region. Then, the computer device may determine a difference between a pixel value of the $e^{th}$ pixel in the second sliding window region and the third pixel average as a third difference corresponding to the $e^{th}$ pixel, and determine the difference between the pixel value of the $j^{th}$ pixel in the object detection region and the second pixel average as the second difference corresponding to the $j^{th}$ pixel. Further, the computer device may determine the region similarity between the second sliding window region and the object detection region based on the third difference corresponding to the $e^{th}$ pixel and the second difference corresponding to the $j^{th}$ pixel. The third pixel average is an average obtained by performing average calculation on the pixel values of the pixels in the second sliding window region. The third difference is a difference between the pixel value of the $e^{th}$ pixel in the second sliding window region and the third pixel average.

In some embodiments of this application, the pixel position transformation relationship may be used for performing mapping transformation on the pixel in the initial positioned region into the object detection region. That is, the pixel position transformation relationship is a first transformation relationship constructed according to the pixel position of the pixel in the initial positioned region and the pixel position of the corresponding pixel in the object detection region. The first transformation relationship may be a forward transformation relationship used for transformation from the initial positioned region into the object detection region. In other words, the pixel position transformation relationship represents a specific transformation relationship (for example, the forward transformation relationship) that may be used for performing transformation (for example, forward transformation) on a pixel position of a pixel in the initial positioned region into a pixel position of a pixel obtained through mapping in the object detection region, so that a pixel obtained through mapping in the service image may be subsequently determined by using the currently obtained pixel position transformation relationship and a pixel position of a pixel in the object detection region. For example, inverse transformation may be performed on a pixel position of a pixel in the object detection region by using the currently obtained pixel position transformation relationship (for example, an inverse transformation relationship further determined by using the forward transformation relationship), to transform (for example, inversely transform) the pixel position of the pixel in the object detection region into a pixel obtained through mapping in the initial positioned region. In this way, after a specific local region (for example, the local reference region 223a shown in FIG. 2) that needs to be focused on is pre-marked in the object detection region of the template image, a local mapped region on which foreground recognition is to be performed may be more accurately and efficiently determined in the service image by using the currently constructed pixel position transformation relationship, so that the local mapped region determined in the service image may be used as a local region, of the target object, that needs to be focused on and that is determined in the service image, thereby improving accuracy and efficiency of foreground recognition in a process of performing foreground region recognition by using the local mapped region.

Specifically, in some embodiments of this application, the pixel position transformation relationship may be determined based on the pixel position of the pixel in the object detection region and the pixel position of the pixel in the initial positioned region, that is, the pixel position transformation relationship used for transformation from the initial positioned region into the object detection region may be constructed.

A specific process in which the computer device constructs the pixel position transformation relationship may be described as: The computer device may determine K key pixels from the initial positioned region, where K is a positive integer greater than 1. Further, the computer device may determine, in the object detection region, K associated pixels corresponding to the K key pixels. One key pixel herein may correspond to one associated pixel. Further, the computer device may construct K pixel pairs based on the K key pixels and the K associated pixels, where one pixel pair herein includes one key pixel and one corresponding associated pixel. Further, the computer device may determine pixel positions of the K key pixels and pixel positions of the K associated pixels in a target coordinate system, to calculate, based on the pixel position of the key pixel and the pixel position of the associated pixel included in each of the K pixel pairs, a pixel position transformation matrix representing the pixel position transformation relationship.

The key pixel may be a pixel determined in the initial positioned region and used for calculating the pixel position transformation relationship. For example, the key pixels herein may be all the pixels in the initial positioned region or some pixels selected from the initial positioned region. Similarly, the associated pixels may be pixels in the object detection region that have same pixel coordinates as the key pixels. Generally, to more conveniently determine the associated pixel corresponding to the key pixel, in some embodiments of this application, when some pixels are selected from the initial positioned region as the key pixels, pixels at various corner positions and/or central positions in the initial positioned region may be specifically used as the key pixels. For example, when the initial positioned region is a rectangular region, corners herein may be specifically four vertexes of the rectangular region.

For another example, in one or more implementations, if a key pixel is a pixel selected from the initial positioned region and on a pixel coordinate indicated by the 1st row and 1st column, an associated pixel corresponding to the key pixel may be a pixel selected from the object detection region and on the same pixel coordinate specified by the 1st row and 1st column. For another example, if a key pixel is a pixel selected from the initial positioned region and on a pixel coordinate indicated by the 5th row and 5th column, an associated pixel corresponding to the key pixel may be a pixel selected from the object detection region and on the same pixel coordinate specified by the 5th row and 5th column. A quantity of key pixels (namely, a value of K) selected from the initial positioned region is not limited in some embodiments of this application.

One key pixel may correspond to one associated pixel, so that one pixel pair may be constructed based on one key pixel and one corresponding associated pixel. In this case, for the K key pixels, the K pixel pairs may be constructed based on the K key pixels and the K associated pixels corresponding to the K key pixels. In other words, one pixel pair is constructed by using a key pixel selected from the initial positioned region and an associated pixel that has a same pixel coordinate and that is determined in the object detection region.

The pixel position herein is a position of a pixel in the target coordinate system. When the pixel position transformation matrix is determined, the pixel in the initial positioned region and the pixel in the object detection region need to be converted into a same coordinate system (namely, the target coordinate system), so that the pixel position transformation relationship used for transformation from the initial positioned region into the object detection region may be determined in the same coordinate system (namely, the target coordinate system).

The target coordinate system may be a two-dimensional coordinate system. That is, the two-dimensional coordinate system may specifically include an x-axis (also referred to as a first coordinate axis) and a y-axis (also referred to as a second coordinate axis). An origin of the target coordinate system may be any position in a plane of a corresponding image. For example, in some embodiments of this application, in a process of constructing the target coordinate system, an upper left corner of the service image (or the template image) may be determined as the origin, and further, two sides parallel to the length and the width of the service image (or the object detection region) may be respectively determined as the x-axis and the y-axis. The target coordinate system may be specifically an image coordinate system, and uses a physical unit (for example, millimeter) to represent a position of a pixel in the image. For example, if a pixel position of a pixel may be represented as (10, 11), it indicates that in the target coordinate system, a value of the pixel on the x-axis may be 10, and a value of the pixel on the y-axis may be 11.

The target coordinate system herein may be a constructed coordinate system that is used for determining pixel positions of pixels in the initial positioned region and the object detection region, so that the pixel in the initial positioned region and the pixel in the object detection region may be converted into the same coordinate system based on the target coordinate system, to determine, in the same coordinate system, a pixel position of the pixel in the initial positioned region in the target coordinate system and a pixel position of the pixel in the object detection region in the target coordinate system.

In some embodiments of this application, at least two pixel pairs are needed in a process of calculating the pixel position transformation matrix representing the pixel position transformation relationship. In addition, the pixel position transformation matrix may be represented by the following formula (2):

$$M_0 = \begin{bmatrix} 1 & 0 & t_x \\ 0 & 1 & t_y \\ 0 & 0 & 1 \end{bmatrix} \qquad \text{formula (2)}$$

In the formula (2), $M_0$ may be the pixel position transformation matrix representing the pixel position transformation relationship. The matrix element $t_x$ indicates a distance by which a pixel in the initial positioned region needs to move on the x-axis in the target coordinate system to be transformed into a pixel on a same pixel coordinate in the object detection region. Similarly, the matrix element $t_y$ indicates a distance by which the pixel in the initial positioned region needs to move on the y-axis in the target coordinate system to be transformed into the pixel on the same pixel coordinate in the object detection region. Based on this, in some embodiments of this application, a pixel position of a pixel in the object detection region may be left-multiplied by a mapped pixel position of an inverse matrix (namely, $Mi_{nv} = M_0^{-1}$) of the pixel position transformation matrix (namely, $M_0$), to determine a pixel corresponding to a calculated mapped pixel position as a mapped pixel in the initial positioned region (that is, the mapped pixel in the initial positioned region is a pixel obtained by performing inverse transformation on the pixel in the object detection region). In other words, in some embodiments of this application, the mapped pixel that is of the pixel in the object detection region and that is in the initial positioned region may be quickly determined by using the pixel position transformation matrix (which may be specifically the inverse matrix of the pixel position transformation matrix). In some embodiments of this application, "inverse" in the inverse matrix (namely, $M_{inv}$) means that an inverse transformation operation inverse to the original matrix (namely, $M_0$) needs to be performed. This means that in some embodiments of this application, a pixel in the object detection region may be inversely transformed into the initial positioned region by using the inverse matrix (namely, $M_{inv} = M_0^{-1}$) of the pixel position transformation matrix (namely, $M_0$). In some embodiments of this application, the pixel position transformation matrix (namely, $M_0$) used for performing forward transformation and the inverse matrix (namely, $M_{inv} = M_0^{-1}$) used for performing inverse transformation may be collectively referred to as constructed pixel position transformation relationships. The pixel position transformation relationship corresponding to the pixel position transformation matrix (namely, $M_0$) may be the foregoing forward transformation relationship, and a pixel position transformation relationship corresponding to the inverse matrix (namely, $M_{inv} = M_0^{-1}$) may be the foregoing inverse transformation relationship.

Operation S103: determine a local mapped region in the service image corresponding to a predefined local reference region in the template image based on the pixel position mapping matrix. In some embodiments, determine, in the service image based on the pixel position transformation relationship when determining the local reference region from the template image, a local mapped region corresponding to the local reference region, and use the local mapped region as the target positioned region of the target object.

The local reference region may be a region that is preset in the template image and that is referenced for determining the to-be-processed local region in the service image. The local reference region may be a region that is pre-marked in the template image by the user (for example, the quality detector) according to an actual requirement in the industrial scenario and that needs to be focused on. That is, the local reference region is a local region that is marked in the template image and on which edge curve fitting needs to be performed.

The local mapped region is a region obtained through mapping in the service image when the local reference region in the template image is inversely transformed into the service image. In some embodiments of this application, the local mapped region obtained through mapping in the service image may be collectively referred to as the target positioned region on which the edge curve fitting is to be performed. That is, the target positioned region is a region on which the edge curve fitting is to be subsequently performed. This means that the target positioned region in some embodiments of this application may be determined based on a mapped pixel obtained by inversely mapping a pixel in the local reference region marked in the template image to the service image after a pixel in the local mapped region is inversely transformed by using the inverse matrix corresponding to the pixel position transformation relationship. Determining the local reference region from the template image may be specifically determining (for example, identifying and positioning) the pre-marked local reference region from the object detection region in the template image.

In an implementation, if the template image is zoomed in advance when the object detection region is determined, when the local reference region is determined, the local reference region is still determined from the template image zoomed in the same zooming manner.

Specifically, the computer device may determine (for example, select) P reference pixels in the local reference region, where P is a positive integer greater than 1. Further, the computer device may determine pixel positions of the P reference pixels in the target coordinate system. Further, the computer device may determine, in the service image based on the pixel position transformation relationship (for example, the inverse matrix of the foregoing pixel position transformation matrix) and the pixel positions of the P reference pixels, P mapped pixels corresponding to the P reference pixels, where one reference pixel corresponds to one mapped pixel. Then, the computer device may determine, in the service image based on the P mapped pixels, the local mapped region corresponding to the local reference region. For example, in some embodiments of this application, a region formed by the P mapped pixels may be used as the local mapped region that corresponds to the local reference region and that is determined in the service image. In other words, in some embodiments of this application, the local mapped region is a region obtained by performing pixel position transformation on pixels (for example, the P reference pixels) in the local reference region based on the pixel position transformation relationship.

The reference pixel may be a reference point selected from the local reference region and used for determining the local mapped region. Similarly, the mapped pixel may be a pixel determined in the service image and obtained through mapping of a corresponding reference pixel. For example, the pixel position transformation relationship may be represented as performing inverse transformation (which may be specifically performing inverse matrix transformation processing) on a pixel position transformation matrix, to obtain an inverse matrix (for example, $M_{inv}$) of the pixel position transformation matrix. Further, a pixel position of a reference pixel may be left-multiplied by the inverse matrix of the pixel position transformation matrix, to accurately obtain, through pixel position transformation, a mapped pixel position corresponding to the reference pixel, so that a pixel corresponding to the mapped pixel position may be determined as a mapped pixel in the service image, where one reference pixel may correspond to one mapped pixel.

A quantity of reference pixels should be greater than 1 (that is, P is a positive integer greater than 1). In other words, in some embodiments of this application, the local mapped region, namely, the local region that is of the target object and that needs to be focused on, may be finally positioned by using mapped pixels corresponding to a plurality of reference pixels.

For example, for ease of understanding, an example in which the P reference pixels are four corners of the local reference region is used herein to describe a specific process of transforming, into the service image by using the foregoing pixel position transformation relationship, the pixels in the local reference region pre-marked in the template image. In some embodiments of this application, pixel positions of the four corners selected from the local reference region may be inversely transformed by using the inverse matrix (for example, $M_{inv}$) of the pixel position transformation matrix, to transform the pixels in the local reference region into the service image, so that mapped pixels (namely, four mapped pixels) corresponding to the four corners may be obtained in the service image, and a rectangular region may be further quickly determined in the service image based on the mapped pixels (namely, the four mapped pixels) corresponding to the four corners. In this case, the determined rectangular region is the local mapped region corresponding to the local reference region. In some embodiments of this application, the region size of the local mapped region is consistent with the region size of the local reference region.

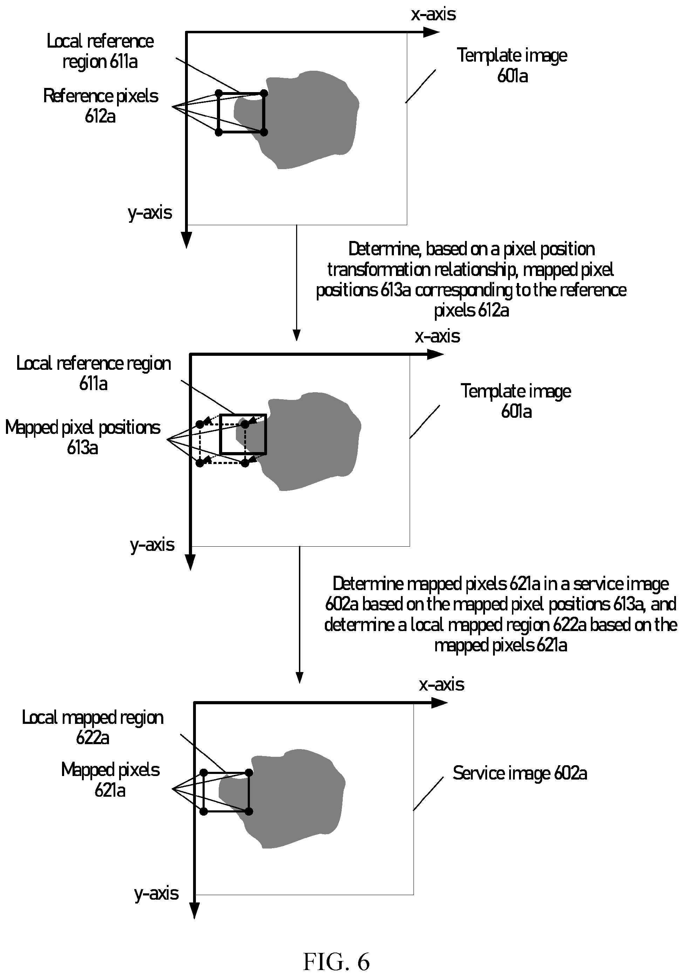

In some embodiments of this application, the target positioned region may be a region that is determined based on the local mapped region and that is used for performing curve fitting on the edge curve of the target object. Further, refer to FIG. 6. FIG. 6 is a schematic diagram of a region mapping effect according to some embodiments of this application. A coordinate system shown in FIG. 6 formed by coordinate axes (for example, an x-axis and a y-axis) is the foregoing target coordinate system. In the target coordinate system, a region corresponding to a mark display frame pre-marked by a quality detector in a template image 601a may be a local reference region 611a shown in FIG. 6. As shown in FIG. 6, the computer device may select four vertexes (namely, the four corners) from the local reference region 611a as the P (for example, P = 4) reference pixels. For example, the four reference pixels may be specifically four reference pixels 612a shown in FIG. 6. Further, the computer device may perform inverse transformation on the four reference pixels 612a based on the pixel position transformation relationship (for example, the inverse matrix of the foregoing pixel position transformation matrix), to determine (that is, obtain through transformation), in the template image 601a, mapped pixel positions 613a corresponding to the reference pixels 612a. The four mapped pixel positions 613a obtained in the template image 601a may be shown in FIG. 6. In the target coordinate system, one mapped pixel position may be correspondingly calculated for each reference pixel in the local reference region 611a. Further, the computer device may determine four mapped pixels 621a in a service image 602a based on the four mapped pixel positions 613a, and may further determine, in the service image 602a, a local mapped region 622a shown in FIG. 6 based on a region formed by the four mapped pixels 621a. In the target coordinate system, one mapped pixel position 613a may be used for determining a pixel on a same pixel coordinate as one mapped pixel in the service image 602a, to obtain the four mapped pixels 621a shown in FIG. 6. Further, the local mapped region 622a may be determined based on the four mapped pixels 621a. Then, the computer device may determine the local mapped region 622a as a target positioned region that is determined in the service image 602a, namely, the local region that is of the target object and that needs to be focused on.

Operation S104: identify, in the local mapped region, a foreground region of the target object, and obtain an edge curve of the target object in the local mapped region by performing edge curve fitting processing on pixels in the foreground region. In some embodiments, identify, in a target positioned image corresponding to the target positioned region, the foreground region corresponding to the target object, and perform edge curve fitting processing on pixels in the foreground region to obtain the edge curve of the target object.

The target positioned image (i.e., local mapped region) herein is an image determined based on the target positioned region. For example, in an implementation, the computer device may perform image cropping on the target positioned region in the service image, to obtain the target positioned image through cropping.

The foreground region is a part that has higher visibility and significance in the target positioned image. Herein, the foreground region may be a region in which the target object is located and that is identified and obtained through cropping from the target positioned image (for example, the foregoing local region that is of the target object and that needs to be focused on).

In some embodiments of this application, when the foreground region corresponding to the target is identified from the target positioned image, the recognition may be performed by using a semantic segmentation network or a conventional threshold segmentation network or by using another deep learning method such as instance segmentation or panoptic segmentation. This is not limited herein. Some factors in the local region may affect extraction of a region edge line. For example, a feature, shape, and grayscale may change with a photographing background (such as a platform), the object (such as the industrial component), and a light source. Therefore, to prevent the factors in the local region from affecting the extraction of the region edge line, it is proposed in some embodiments of this application that the foreground region may be identified from the local region (for example, the target positioned image corresponding to the target positioned region) through deep learning to discover a deeper feature in the target positioned image, rather than simply based on continuity of grayscale values. This can improve the accuracy of the foreground region recognition, to improve accuracy of the edge curve obtained through fitting.

Specifically, a specific process in which the computer device identifies, in the target positioned image corresponding to the target positioned region, the foreground region corresponding to the target object may be described as: The computer device may obtain a target foreground recognition network used for performing foreground region recognition. Further, the computer device may input, into the target foreground recognition network, the target positioned image corresponding to the target positioned region, where the target foreground recognition network performs foreground region recognition processing on the target positioned image, to obtain a foreground probability of each pixel in the target positioned image. Further, the computer device may determine, based on the foreground probability of each pixel in the target positioned image, the foreground region corresponding to the target object. The foreground probability herein is a probability that each pixel identified in the target positioned image belongs to the foreground region. A larger value of the foreground probability herein indicates a higher possibility that a pixel corresponding to the foreground probability belongs to the foreground region. Otherwise, a smaller value of the foreground probability indicates a lower possibility that a pixel corresponding to the foreground probability belongs to the foreground region.

The target foreground recognition network is a network configured to perform foreground region recognition on the target positioned image. The target foreground recognition network may be a neural network, for example, the foregoing semantic segmentation network, the foregoing conventional threshold segmentation network, an instance segmentation network, or a panoptic segmentation network. This is not limited herein. For example, the foreground region recognition processing herein is a processing process of determining and identifying the foreground region in the target positioned image. The foreground probability is a probability that a pixel is a foreground pixel (namely, a pixel belonging to the foreground region). A higher foreground probability indicates a higher probability that the pixel is a foreground pixel (that is, indicates a higher probability that the pixel belongs to the foreground region). Otherwise, a lower foreground probability indicates a lower probability that the pixel is a foreground pixel (that is, indicates a lower probability that the pixel belongs to the foreground region).

In some embodiments, a specific process in which the computer device performs foreground region recognition processing on the target positioned image by using the target foreground recognition network may be described as: The computer device may perform feature extraction processing on the target positioned image by using the target foreground recognition network, to obtain an image feature of the target positioned image. Further, the computer device may perform foreground recognition processing based on the image feature, to obtain the foreground probability of each pixel in the target positioned image. The feature extraction processing may be implemented by using a multi-layer neural network. The image feature is an image feature used for performing foreground recognition, and the image feature may be represented as a feature map.

A specific process in which the computer device performs feature extraction processing on the target positioned image by using the target foreground recognition network, to obtain the image feature may be described as: The computer device may determine, by using the target foreground recognition network, a plurality of initial feature maps corresponding to the target positioned image, where the feature sizes of the plurality of initial feature maps are different. In other words, in some embodiments of this application, feature extraction processing of different scales may be performed on the target positioned image by using the target foreground recognition network, to obtain a plurality of initial feature maps of different scales. Further, the computer device may perform feature fusion processing on the plurality of initial feature maps, to obtain the image feature of the target positioned image. The different initial feature maps may be obtained by separately performing convolution processing on the target positioned image based on convolution kernels of different sizes (namely, the foregoing different scales). Because the convolution kernels are different in size, the initial feature maps obtained by the computer device by performing convolution processing on the target positioned image are also different in size. In a process of performing feature fusion processing on the plurality of initial feature maps, to obtain the image feature of the target positioned image, the computer device may specifically perform feature fusion processing on the plurality of initial feature maps by using one neural network layer, to obtain the image feature of the target positioned image.

A specific process in which the computer device determines, based on the foreground probability of each pixel in the target positioned image, the foreground region corresponding to the target object may be described as: The computer device may determine, in the target positioned image, pixels whose foreground probabilities are greater than or equal to a probability threshold as foreground pixels, and may determine, based on the foreground pixels, the foreground region corresponding to the target object.

In some embodiments, when determining, based on the foreground pixels, the foreground region corresponding to the target object, the computer device may further determine whether each foreground pixel is adjacent to another foreground pixel, and adjust an isolated foreground pixel (namely, a foreground pixel that is not consecutive or adjacent to another foreground pixel) as a background pixel, to determine the foreground region based on the foreground pixels obtained by removing the isolated foreground pixel. The background pixel is a pixel in the background region. The background pixel herein may be a pixel, other than the foreground pixels, identified in the target positioned image.

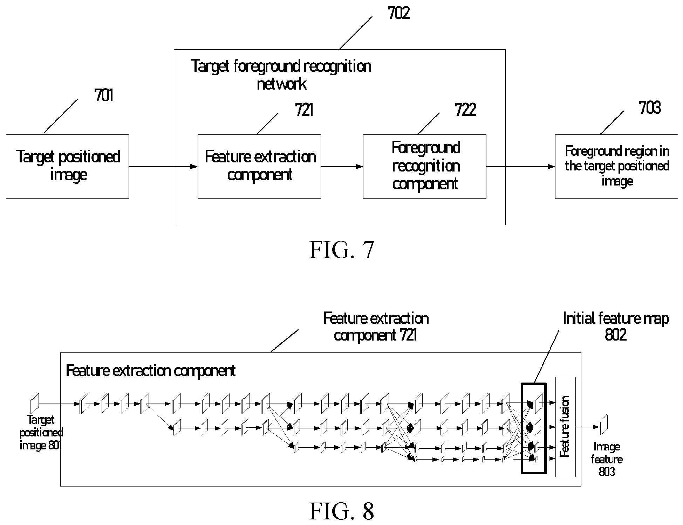

For example, refer to FIG. 7. FIG. 7 is a schematic diagram of an effect of a target foreground recognition network according to some embodiments of this application. When obtaining a target positioned image 701, the computer device may input the target positioned image 701 into the target foreground recognition network 702 shown in FIG. 7. In this way, the target foreground recognition network 702 may perform, by using a feature extraction component 721, feature extraction processing on the target positioned image, to obtain an image feature of the target positioned image 701. Further, as shown in FIG. 7, the computer device may perform, by using a foreground recognition component 722, foreground recognition processing on the image feature that is of the target positioned image 701 and that is outputted by the feature extraction component 721, to obtain a foreground region 703 in the target positioned image.

For ease of understanding, a specific process of performing foreground recognition processing on the target positioned image by using the target foreground recognition network is described herein by using an example in which the target foreground recognition network is a neural network. Further, refer to FIG. 8. FIG. 8 is a schematic structural diagram of a feature extraction component according to some embodiments of this application. The feature extraction component 721 shown in FIG. 8 may be specifically in a specific structure of the feature extraction component 721 shown in FIG. 7. In this way, after inputting a target positioned image 801 into the feature extraction component 721, the computer device may extract, by using the feature extraction component 721, a plurality of initial feature maps (for example, a plurality of initial feature maps 802 shown in FIG. 8) corresponding to the target positioned image 801. The feature sizes of the initial feature maps 802 shown in FIG. 8 are different. Further, as shown in FIG. 8, the computer device may perform feature fusion processing on the plurality of initial feature maps 802, to obtain an image feature 803 shown in FIG. 8. The initial feature maps of different feature sizes may be obtained by separately performing convolution processing on the target positioned image based on convolution kernels of different sizes. Because the convolution kernels used for performing convolution processing are different in size, the initial feature maps obtained by the computer device by performing convolution processing on the initial feature maps by using the convolution kernels of different sizes are different in size.

In another implementation, the target foreground recognition network may alternatively be a semantic segmentation network based on an HRNetV2 network (a neural network used for extracting different resolutions). When feature extraction is performed by using an HRNet (a neural network), more abundant image features having multiple resolutions may be extracted. Therefore, the extracted image features having different resolutions may be further connected in parallel by using a convolutional layer in the semantic segmentation network, to ensure that there are many features on which information exchange and fusion may be performed in an image feature obtained through feature fusion. For example, an output of a high-resolution subnet used during final prediction exists in the image feature outputted by the HRNet (a neural network). This means that the image feature outputted by the HRNet (a neural network) may ensure that the network always keeps a high-resolution feature. Therefore, accurate pixel-level classification can be implemented by using the HRNet, so that the stability of the edge curve obtained through fitting is greatly improved, and this is very suitable for meeting strict specification requirements in industrial quality detection.

The target foreground recognition network may be a network obtained by training an initial foreground recognition network based on a large amount of sample data. The initial foreground recognition network may be a foreground recognition network that has not been trained or whose training has not been completed. A network structure of the initial foreground recognition network is consistent with a network structure of the target foreground recognition network.

Specifically, a specific process in which the computer device trains the initial foreground recognition network to obtain the target foreground recognition network may be described as: The computer device may obtain a sample object image, where the sample object image herein is associated with sample foreground region marking information of a sample object. Further, the computer device may obtain the initial foreground recognition network, and input the sample object image into the initial foreground recognition network. The initial foreground recognition network performs foreground region recognition processing on the sample object image, to obtain a foreground probability of each pixel in the sample object image. Further, the computer device may perform iterative training on the initial foreground recognition network based on the foreground probability of each pixel in the sample object image and the sample foreground region marking information, and determine an iteratively trained initial foreground recognition network as the target foreground recognition network.

The sample object image is an image used for training the initial foreground recognition network. The sample object may be an object used for determining the sample object image. In some embodiments of this application, a region in which the sample object is located in the sample object image may be marked as a sample foreground region. In this case, the sample foreground region marking information is label information that is of the sample foreground region and that is marked in the sample object image. In addition, when performing iterative training on the initial foreground recognition network based on the foreground probability of each pixel in the sample object image and the sample foreground region marking information, the computer device may first output, through prediction in the sample object image based on the foreground probability of each pixel in the sample object image, predicted foreground region label information corresponding to the sample foreground region, further determine a network loss value of the initial foreground recognition network by using the foreground region label information that is outputted through prediction and the pre-marked sample foreground region marking information, and perform iterative training on the initial foreground recognition network based on the determined network loss value. When a network loss value obtained through iterative training satisfies a model convergence condition, a network whose network loss value satisfies the model convergence condition may be determined as the target foreground recognition network.

For a specific implementation method for performing foreground region recognition processing on the sample object image by the initial foreground recognition network, to obtain the foreground probability of each pixel in the sample object image, refer to related descriptions of performing foreground region recognition processing on the target positioned image by the target foreground recognition network, to obtain the foreground probability of each pixel in the target positioned image, and details are not described herein.

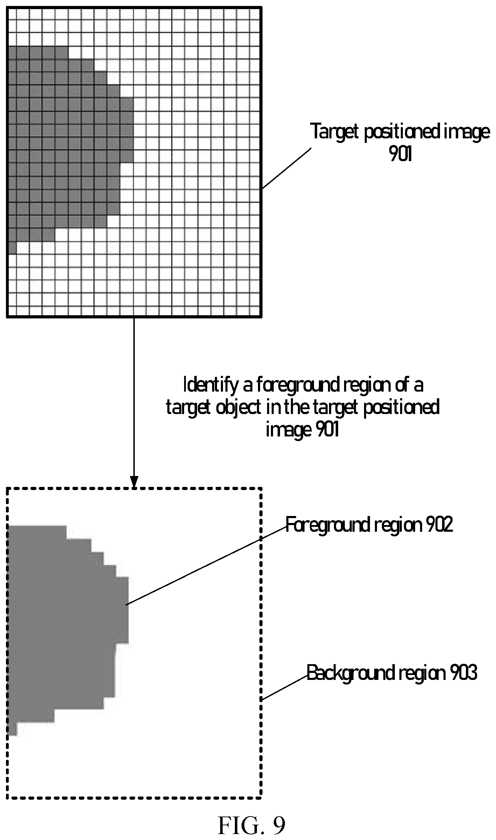

For example, refer to FIG. 9. FIG. 9 is a schematic diagram of a foreground recognition effect according to some embodiments of this application. As shown in FIG. 9, a target positioned image 901 includes a plurality of pixels. When performing foreground region recognition processing on the target positioned image 901 by using the target foreground recognition network, the computer device may determine a foreground probability that each pixel is a foreground pixel, to determine pixels whose foreground probabilities are greater than a preset probability threshold as foreground pixels when the foreground probabilities are greater than the preset probability threshold. For example, in the target positioned image 901 shown in FIG. 9, a foreground region that is of a target object and that is identified from the target positioned image 901 by using the target foreground recognition network may be a foreground region 902 shown in FIG. 9. In this case, the computer device may collectively determine other regions than the foreground region 902 as a background region in the target positioned image 901. For example, the background region herein may be a background region 903 shown in FIG. 9.

A specific process in which the computer device performs edge curve fitting processing on the pixels in the foreground region to obtain the edge curve of the target object may be described as: The computer device may determine an edge pixel set of the target object from the pixels in the foreground region, where the edge pixel set herein may include N edge pixels, and N is a positive integer. Further, the computer device may directly perform curve fitting processing based on the N edge pixels, to obtain the edge curve of the target object through fitting.

In another implementation, to improve efficiency of obtaining the edge curve through curve fitting, the computer device may further select (for example, randomly select or perform fixed-point selection based on a corresponding pixel selection rule) M edge pixels from the N edge pixels included in the edge pixel set, to determine the selected M edge pixels as M first fitting pixels, where M is a positive integer less than N. Further, the computer device may perform curve fitting processing on the M first fitting pixels, to obtain a fitted curve corresponding to the M first fitting pixels. Further, the computer device may determine the edge curve of the target object based on a fitted curve corresponding to the M first fitting pixels.

The edge pixel set is a set including edge pixels, and the edge pixels are pixels at an edge of the foreground region. The edge pixel set may include a plurality of edge pixels, namely, the N edge pixels.

The edge curve is a curve obtained through fitting based on the edge pixels in the foreground region. The edge curve may be an edge straight line obtained through fitting, a quadratic curve obtained through fitting, a circle obtained through fitting, or the like. This is not limited herein. In other words, a curve type of the edge curve may be a straight line, a quadratic curve, a circle, or the like. This is not limited herein. In a process of performing curve fitting processing based on the N edge pixels to obtain the edge curve of the target object, the computer device may specifically perform curve fitting processing by using a random sample consensus linear regression algorithm, a simple linear regression algorithm, regression using a neural network, or the like. This is not limited herein.

In some scenarios, the edge curve may be an edge straight line. Further, the target object may be measured based on the edge straight line, to obtain a detection value. For example, shortest distances between the edge straight line and some key positions in the target object are determined as detection values, to perform object quality management by using the detection values obtained through measurement. For example, whether the target object meets a specification is determined based on the detection values.

Specifically, the edge curve includes the edge straight line. Therefore, some embodiments of this application may further include the following operations: determining a to-be-detected pixel in the target positioned image, and determining, based on a distance between the to-be-detected pixel and the edge straight line, a detection value associated with the to-be-detected pixel; and performing object quality management on the target object based on the detection value.

The to-be-detected pixel may be a pixel corresponding to a to-be-detected position in the target object. The detection value may be a value, for example, the distance between the to-be-detected pixel and the edge straight line, obtained by measuring the to-be-detected pixel based on the edge straight line. The distance between the to-be-detected pixel and the edge straight line herein may be a shortest distance between the to-be-detected pixel and the edge straight line.

A specific process in which the computer device performs object quality management on the target object based on the detection value may be described as: The computer device may obtain a reference value range, and compare a reference value with the detection value, to obtain a comparison result; and determines, if the comparison result indicates that the detection value falls within the reference value range, that the target object is a standard object; or determines, if the comparison result indicates that the detection value does not fall within the reference value range, the target object as a non-standard object. The standard object may be an object standard in size, and the non-standard object may be an object not standard in size. Therefore, some embodiments of this application may be applied to measurement of the industrial product (for example, the target object) in the industrial scenario, to detect whether the size of the industrial product is standard, thereby implementing quality management of the industrial product.

In a quality detection process of the industrial manufacturing industry, the size specification is a very strict standard, and it is required in some application that an algorithmic measurement consistency error be less than two pixels and a deviation from an actual value be less than four pixel values. If the size is incorrect, component assembly may fail, and another complete structure of a product may be damaged. Therefore, during industrial quality detection, the product size needs to be measured depending on image vision. Based on this, to measure the product size, positions of various key points and lines need to be positioned. Therefore, the edge curve of the target object can be accurately obtained through fitting by using the image processing solution in some embodiments of this application, thereby improving high efficiency and accuracy of quality management of the target object (for example, an industrial component or a product).

When the edge curve is a curve of another type, detection may also be performed based on the edge curve, to perform object quality management on the target object based on a detection value. Specifically, the computer device may determine a to-be-detected pixel in the target positioned image, and determine, based on a distance between the to-be-detected pixel and the edge curve, a detection value associated with the to-be-detected pixel, to perform object quality management on the target object based on the detection value.

The distance between the to-be-detected pixel and the edge curve may be a shortest distance between the to-be-detected pixel and the edge curve. For example, when the edge curve is a circle, the distance between the to-be-detected pixel and the edge curve may be determined based on a distance between the point and a center of the circle and a radius of the circle. For example, an absolute value of a difference between the radius of the circle and the distance between the to-be-detected pixel and the center of the circle is determined as the distance between the to-be-detected pixel and the edge curve. For another example, when the edge curve is a quadratic curve (such as an ellipse or a hyperbole), a point (denoted as a first short-distance point) closest to the to-be-detected pixel may be assumed, a tangent line $h1$ of the edge curve is determined by using the first short-distance point, and a connecting line $h2$ between the first short-distance point and the to-be-detected pixel is determined. The tangent line $h1$ and the connecting line $h2$ should be perpendicular to each other. In this case, a specific position of the first short-distance point may be determined by using a product of a slope $A1$ of the tangent line $h1$ and a slope $A2$ of the connecting line $h2$ (for example, a calculation formula is determined by using a product of $A1$ and $A2$ being -1 to determine the specific position of the first short-distance point). Further, the distance between the to-be-detected pixel and the edge curve is determined based on a distance between the to-be-detected pixel and the first short-distance point. Alternatively, a shortest distance between the to-be-detected pixel and the edge curve being the quadratic curve may be determined in another manner. For example, assuming that a circle is determined by using the to-be-detected pixel as a center of the circle, a circle radius is the shortest distance between the to-be-detected pixel and the edge curve when the circle is tangent to the edge curve. For another example, when the edge curve is of another curve type, for example, when the edge curve is a curve determined based on a continuously differentiable function, the edge curve may be derived to determine a tangent line of a specific point (denoted as a first curve point) on the edge curve. This is because: A tangent line of a specific point on the curve is a straight line represented by a derivative of the curve at the point. A connecting line between the first curve point and the to-be-detected pixel is determined. When the connecting line and the tangent line of the first curve point are perpendicular to each other, a shortest distance between the to-be-detected pixel and the edge curve is obtained.

There may be some other measurement methods according to actual requirements. For example, when the edge curve is an edge circle (namely, an edge curve whose curve type is a circle), a radius of the edge circle is determined as a detection value, and object quality management is performed on the target object based on the detection value. In some scenarios, the shape of a to-be-detected part in the target positioned region is a circle, and a radius of the circle needs to be measured. In this case, an edge curve of the circle may be obtained through fitting in some embodiments of this application, so that the radius of the object may be determined based on the edge curve obtained through fitting. For another example, when the edge curve is an ellipse, a distance between the to-be-detected pixel and a straight line on which a major axis of the ellipse is located may be determined as a detection value, and object quality management is performed on the target object based on the detection value. For another example, when the edge curve is an ellipse, the length of a major axis or a minor axis of the ellipse may be determined as a detection value, and object quality management is performed on the target object based on the detection value. In some scenarios, the shape of the object in the target positioned region is an ellipse, and the lengths of a major axis and a minor axis of the object need to be measured. In this case, an edge curve of the ellipse may be obtained through fitting in some embodiments of this application. Therefore, the lengths of the major axis and the minor axis of the object may be determined based on the edge curve obtained through fitting.

According to some embodiments of this application, when the service image including the target object is obtained, the template image used for assisting in positioning the target object is obtained, to determine the object detection region from the template image. The region size of the object detection region herein is smaller than the region size of the service image. In this way, in some embodiments of this application, when the region matching the object detection region is found in the service image, the found region may be quickly determined as the initial positioned region of the target object, so that the pixel position transformation relationship may be determined based on the pixel position of the pixel in the object detection region and the pixel position of the pixel in the initial positioned region. Further, in some embodiments of this application, when the local reference region (the local reference region herein is a local region that is pre-marked in the template image) is determined from the template image, the local mapped region corresponding to the local reference region may be directly determined in the service image based on the pixel position transformation relationship (for example, the inverse matrix of the pixel position transformation matrix), so that the local mapped region may be used as the target positioned region of the target object. Further, in some embodiments of this application, the foreground region corresponding to the target object may be identified in the target positioned image corresponding to the target positioned region, and then the edge curve fitting processing may be performed on the pixels in the foreground region, to obtain the edge curve of the target object. It can be learned from this that in some embodiments of this application, an initial positioned region may be first determined quickly in the service image based on an object detection region in a template image, and then a pixel position transformation matrix used for transforming (for example, performing forward transformation on) a pixel in the initial positioned region into the object detection region may be constructed by using a pixel position of a pixel in the initial positioned region and a pixel position of a pixel in the object detection region, so that a forward transformation relationship represented by the pixel position transformation matrix may be determined as a pixel position transformation relationship. In this way, when a pre-marked local region (namely, the foregoing local reference region) exists in the template image, a pixel position of a key pixel in the local reference region may be transformed (for example, inversely transformed) by using an inverse transformation relationship of the pixel position transformation relationship (for example, an inverse matrix of the pixel position transformation matrix), to obtain a local mapped region corresponding to the local reference region, and the local mapped region may be quickly used as a target positioned region positioned in the service image, so that when a foreground region is subsequently identified from a target positioned image corresponding to the target positioned region, an edge curve may be quickly and accurately determined based on the foreground region.

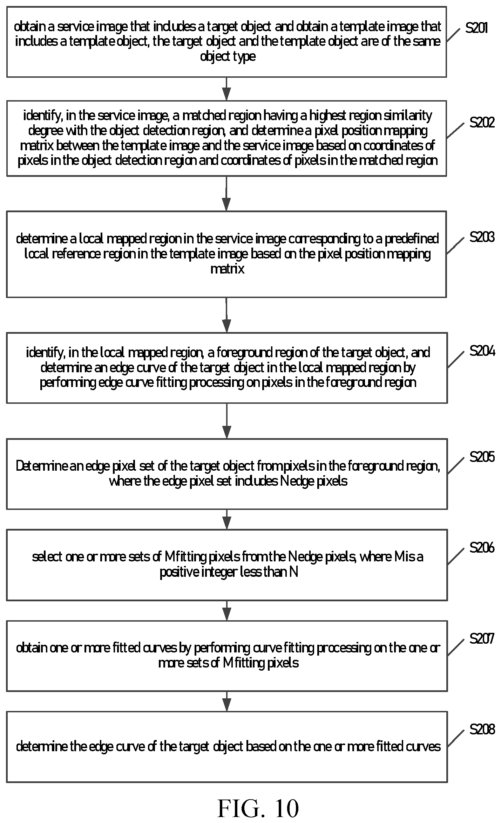

Further, refer to FIG. 10. FIG. 10 is a schematic flowchart of an image processing method according to various embodiments of this application. The method may be performed by a computer device. The method may include at least the following operation S201 to operation S208.

Operation S201: obtain a service image that includes a target object and obtain a template image that includes a template object, the target object and the template object are of the same object type. In some embodiments, obtain a service image including a target object, obtain a template image used for assisting in positioning the target object, and determine, from the template image, an object detection region corresponding to a template object. In some embodiments, a service image that includes a target object is obtained. A template image that includes a template object is obtained, the template object and the target object corresponding to a same object type. An object detection region corresponding to the template object in the template image is determined, a region size of the object detection region being smaller than a region size of the service image.

The template object is an object that exists in the template image and that has a same object type as the target object, and the region size of the object detection region is smaller than the region size of the service image.

Operation S202: identify, in the service image, a matched region having a highest region similarity degree with the object detection region, and determine a pixel position mapping matrix between the template image and the service image based on coordinates of pixels in the object detection region and coordinates of pixels in the matched region. In some embodiments, search the service image for a region matching the object detection region, determine the found region as an initial positioned region of the target object, and determine a pixel position transformation relationship (or referred to as pixel position mapping matrix) based on a pixel position of a pixel in the object detection region and a pixel position of a pixel in the initial positioned region. In some embodiments, a matched region in the service image is identified as an initial positioned region of the target object based on the object detection region. A pixel position transformation relationship (e.g., pixel position mapping matrix) is determined based on a pixel position of a pixel in the object detection region and a pixel position of a pixel in the initial positioned region.

Operation S203: determine a local mapped region in the service image corresponding to a predefined local reference region in the template image based on the pixel position mapping matrix. In some embodiments, determine, in the service image based on the pixel position transformation relationship when determining a local reference region from the template image, a local mapped region corresponding to the local reference region, and use the local mapped region as a target positioned region of the target object. In some embodiments, a local mapped region in the service image corresponding to a local reference region in the template image is determined based on the pixel position transformation relationship.

The local mapped region is a region obtained by performing pixel position transformation on pixels in the local reference region based on the pixel position transformation relationship.

Operation S204: identify, in the local mapped region, a foreground region of the target object, and determine an edge curve of the target object in the local mapped region by performing edge curve fitting processing on pixels in the foreground region. In some embodiments, identify, in a target positioned image corresponding to the target positioned region, a foreground region corresponding to the target object. In some embodiments, in a target positioned image corresponding to a target positioned region in the service image based on the local mapped region, a foreground region corresponding to the target object is identified.

For implementation methods for operations S201 to S204, refer to related descriptions of operations S101 to S104 above, and details are not described herein. In some embodiments, in the method in FIG. 10, an edge curve of the target object is obtained based on performing edge curve fitting processing on pixels in the foreground region. In some embodiments, the edge curve is obtained based on operations S205-S208.

Operation S205: Determine an edge pixel set of the target object from pixels in the foreground region, where the edge pixel set includes N edge pixels. In some embodiments, an edge pixel set of the target object is determined from the pixels in the foreground region, where the edge pixel set includes N edge pixels, and N is a positive integer.

N is a positive integer. The edge pixel set is a set including edge pixels, and the edge pixels are pixels at an edge of the foreground region. The edge pixel set may include a plurality of edge pixels, that is, the plurality of edge pixels herein may be the N edge pixels.

A specific process in which the computer device determines the edge pixel set of the target object from the pixels in the foreground region may be described as: The computer device may determine a starting image boundary from the target positioned image, where the starting image boundary includes R pixels, the R pixels include an $s^{th}$ pixel, and s is a positive integer less than or equal to R. Further, the computer device may sequentially traverse, by using the $s^{th}$ pixel as a start point, the pixels in a direction perpendicular to the starting image boundary until the $1^{st}$ foreground pixel is traversed, and determine the determined $1^{st}$ foreground pixel as an edge pixel corresponding to the $s^{th}$ pixel. Further, the computer device may determine, based on the edge pixel corresponding to the $s^{th}$ pixel, a plurality of edge pixels corresponding to the starting image boundary, and determine the edge pixel set based on the plurality of edge pixels corresponding to the starting image boundary.

The starting image boundary is an image boundary used for determining an edge pixel at a corresponding orientation in the target positioned image. Image boundaries of an image may be classified into an upper boundary (also referred to as a first boundary), a lower boundary (also referred to as a second boundary), a left boundary (also referred to as a second boundary), and a right boundary (also referred to as a second boundary). The starting image boundary may be an image boundary at an orientation at which edge pixels need to be determined. For example, if edge pixels at a lower edge of the target object need to be determined, a lower boundary in the target positioned image may be determined as the starting image boundary. If edge pixels at a plurality of orientations (for example, four orientations: an upper orientation, a lower orientation, a left orientation, and a right orientation) need to be determined, a plurality of image boundaries in the target positioned image are all determined as starting image boundaries, to determine a plurality of edge pixels corresponding to each starting image boundary, so that deduplication processing may be performed on the plurality of edge pixels corresponding to each starting image boundary, to obtain the edge pixel set. The starting image boundary may be determined based on an actual requirement. This is not limited herein.

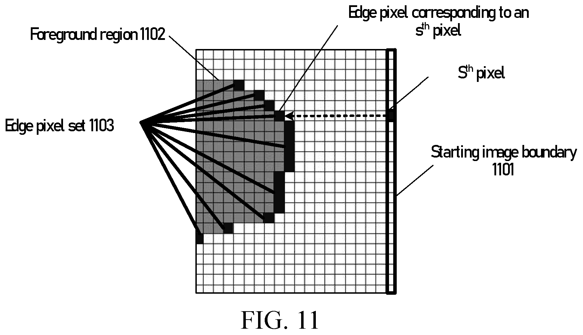

For example, refer to FIG. 11. FIG. 11 shows a process of determining the edge pixel set according to some embodiments of this application. As shown in FIG. 11, the foreground region that is of the target object and that is identified by the computer device in the target positioned image may be a foreground region 1102. Further, the computer device may collectively refer to pixels in the foreground region 1102 as the edge pixel set of the target object. Specifically, the starting image boundary determined by the computer device in the target positioned image may be a starting image boundary 1101 shown in FIG. 11. As shown in FIG. 11, the starting image boundary 1101 includes a plurality of pixels. An $s^{th}$ pixel shown in FIG. 11 is used herein as an example to describe a specific process of determining an edge pixel corresponding to the $s^{th}$ pixel. Herein, the pixels may be sequentially traversed leftwards along a direction of an arrow shown in FIG. 11 by using the $s^{th}$ pixel as a start point, until the $1^{st}$ foreground pixel is determined. The $1^{st}$ foreground pixel herein may be the edge pixel corresponding to the $s^{th}$ pixel shown in FIG. 11. The rest can be deduced by analogy. With reference to a processing process of the $s^{th}$ pixel, an edge pixel corresponding to each pixel on the starting image boundary 1101 may be determined through traversal, to construct the edge pixel set. For example, the edge pixel set determined by using the starting image boundary 1101 may be an edge pixel set 1103 shown in FIG. 11. The edge pixel set 1103 may be an edge pixel set determined from the foreground region 1102.

Further, the computer device may alternatively determine another image boundary as the starting image boundary, to determine edge pixels corresponding to pixels on the another image boundary, and construct another edge pixel set by using the edge pixels corresponding to the pixels on the another image boundary. Then, the computer device may perform deduplication processing on the edge pixels in these determined edge pixel sets, to obtain all edge pixels (for example, the N edge pixels) of the target object in the target positioned image. Therefore, a pixel set including all the edge pixels may be collectively referred to as the edge pixel set of the target object.

Operation S206: select one or more sets of M fitting pixels from the N edge pixels, where M is a positive integer less than N. In some embodiments, select M edge pixels from the N edge pixels included in the edge pixel set, and determine the selected M edge pixels as M first fitting pixels, where M is a positive integer less than N. In some embodiments, one or more sets of M fitting pixels are selected from the N edge pixels in the edge pixel set, where M is a positive integer less than N.

In some embodiments of this application, the computer device may randomly select the M edge pixels from the N edge pixels included in the edge pixel set, to determine the randomly selected M edge pixels as the M first fitting pixels. The first fitting pixels may be pixels that are specifically used for curve fitting and that are selected from the edge pixel set. For example, the first fitting pixels may be edge pixels randomly selected from the N edge pixels included in the edge pixel set.

To obtain the edge curve through fitting, M should at least be 2. In other words, M is a positive integer greater than or equal to 2. In an actual application scenario, a specific value of M may be determined according to an actual requirement.

In another implementation, a quantity of randomly selected pixels may be preset, or a proportion of the randomly selected pixels in the edge pixel set may be preset. Then, the computer device may determine, based on the preset proportion, the quantity of pixels that need to be randomly selected.

Operation S207: obtain one or more fitted curves by performing curve fitting processing on the one or more sets of M fitting pixels. In some embodiments, perform curve fitting processing based on the M first fitting pixels, to obtain a fitted curve corresponding to the M first fitting pixels. In some embodiments, one or more fitted curves are determined based on performing curve fitting processing on the one or more sets of M fitting pixels.

The fitted curve may be a curve obtained by performing curve fitting processing on the fitting pixels (for example, the first fitting pixels) randomly selected from the edge pixel set. The fitting pixels (for example, the first fitting pixels) are edge pixels used for fitting to obtain the fitted curve. Performing curve fitting processing may also be referred to as performing fitting for short.

In some embodiments, the performing curve fitting processing on the one or more sets of M fitting pixels includes: obtaining a function model; obtaining one or more fitted curves based on the one or more sets of M fitting pixels and the function model. A specific process in which the computer device performs curve fitting processing based on the M first fitting pixels, to obtain the fitted curve corresponding to the M first fitting pixels may be described as: The computer device may obtain a to-be-fitted curve function (or function model, e.g., linear, polynomial, exponential, which may be chosen based on the expected behavior of the pixels), and perform curve fitting processing based on the M first fitting pixels and the to-be-fitted curve function, to obtain the fitted curve corresponding to the M first fitting pixels.

The to-be-fitted curve function may be a to-be-solved curve function. For example, if the to-be-fitted curve function is a linear function, the fitted curve determined by using the to-be-fitted curve function may be a straight line. In some embodiments, if the to-be-fitted curve function is a quadratic function, the fitted curve determined by using the to-be-fitted curve function may be a quadratic curve. In some embodiments, if the to-be-fitted curve function is a circular function, the fitted curve determined by using the to-be-fitted curve function may be a circle. In other words, in some embodiments of this application, the corresponding to-be-fitted curve function may be determined according to a type of a curve that actually needs to be obtained through fitting (such as the straight line, the quadratic curve, or the circle), to determine a fitted curve of the corresponding type, and further determine an edge curve of the corresponding type. This means that in some embodiments of this application, the specific type of the curve that needs to be obtained through fitting may be determined according to an actual requirement.

Operation S208: determine the edge curve of the target object based on the one or more fitted curves. In some embodiments, determine the edge curve of the target object based on the fitted curve corresponding to the M first fitting pixels. In some embodiments, the edge curve of the target object is determined based on the one or more fitted curves.

The determining the edge curve of the target object based on the fitted curve corresponding to the M first fitting pixels may be directly determining the fitted curve corresponding to the M first fitting pixels as the edge curve of the target object; or may be repeatedly performing operations S206 and S207 to determine a fitted curve corresponding to another group of M fitting pixels (for example, M second fitting pixels), and determining the edge curve of the target object from a plurality of fitted curves. This is not limited herein.

A specific process in which the computer device determines the edge curve of the target object from the plurality of fitted curves may be described as: The computer device may determine a fitted curve having a largest quantity of inlier pixels in the plurality of fitted curves as the edge curve. The quantity of inlier pixels is a quantity of inlier pixels associated with the fitted curve. An inlier pixel is an edge pixel whose distance to the fitted curve is less than or equal to a distance threshold.

When determining the edge curve of the target object from the plurality of fitted curves, the computer device may determine the edge curve when a quantity of times (for example, iterations, repeats, or rounds of processing) of repeatedly calculating fitted curves (namely, a quantity of curve fitting times or a quantity of curve fitting rounds) reaches a quantity-of-fitting-times threshold (or a quantity-of-fitting-rounds threshold) or when a calculated quantity of inlier pixels of a fitted curve is greater than or equal to a quantity threshold.

In some embodiments, the determining the edge curve of the target object based on the one or more fitted curves includes: calculating a distance between each of the N edge pixels and a current fitted curve of the one or more fitted curves; determining one or more inlier pixels of the current fitted curve from the N edge pixels based on the corresponding distance between each of the one or more inlier pixels and the current fitted curve being less than or equal to a distance threshold; counting a quantity of the one or more inlier pixels; and determining the current fitted curve as the edge curve of the target object based on the quantity of one or more inlier pixels of the current fitted curve being greater than or equal to a quantity threshold.

In some embodiments, the determining the edge curve of the target object based on the one or more fitted curves includes: recording a quantity of curve fitting rounds associated with a first fitted curve of the one or more fitted curves, the first fitted curve has a first quantity of inlier pixels; determining, when the quantity of curve fitting rounds is less than a quantity-of-fitting-rounds threshold, a second fitted curve of the one or more fitted curves, the second fitted curve has a second quantity of inlier pixels; determining one of the first fitted curve and the second fitted curve that corresponds to a larger quantity of inlier pixels as the edge curve of the target object.

In some embodiments, the determining the edge curve includes: updating a quantity of curve fitting rounds every time a set of M fitting pixels is selected; and determining one of the one or more fitted curves corresponding to a largest quantity of inlier pixels as the edge curve of the target object when an updated quantity of curve fitting rounds reaches a quantity-of-fitting-rounds threshold.

Specifically, a specific process in which the computer device determines the edge curve of the target object based on the fitted curve corresponding to the M first fitting pixels may be described as: The computer device may determine the fitted curve corresponding to the M first fitting pixels as a first fitted curve, and calculate a distance between each of the N edge pixels and the first fitted curve. Further, the computer device may determine inlier pixels of the first fitted curve from the N edge pixels based on the distance to the first fitted curve, where the inlier pixel herein is an edge pixel whose distance to the fitted curve is less than or equal to the distance threshold. Further, the computer device may count a quantity of inlier pixels associated with the first fitted curve, and determine the counted quantity of inlier pixels as a quantity of inlier pixels of the first fitted curve. Further, if the quantity of inlier pixels of the first fitted curve is greater than or equal to the quantity threshold, the computer device may determine the first fitted curve as the edge curve of the target object.

The first fitted curve is a fitted curve obtained through fitting based on the M first fitting pixels. The inlier pixel is an edge pixel whose distance to the fitted curve is less than or equal to the distance threshold. The distance threshold is a minimum value that needs to be satisfied by a distance to the fitted curve when the edge pixel is determined as an inlier pixel. In other words, an edge pixel is determined as an inlier pixel when a distance between the edge pixel and the fitted curve is less than or equal to the distance threshold. An edge pixel other than the inlier pixel in the edge pixel set may be referred to as an outlier pixel (also referred to as an outlier).

The distance between the edge pixel and the first fitted curve is a shortest distance between the edge pixel and the first fitted curve. For example, when the first fitted curve is a straight line, the distance between the edge pixel and the first fitted curve may be determined by calculating a shortest distance between the point and the straight line. For example, when the first fitted curve is a circle, the distance between the edge pixel and the first fitted curve may be determined based on a distance between the point and a center of the circle and a radius of the circle. For example, an absolute value of a difference between the radius of the circle and the distance between the edge pixel and the center of the circle is determined as the distance between the edge pixel and the first fitted curve. For another example, when the first fitted curve is a quadratic curve (such as an ellipse or a hyperbole), a point (denoted as a second short-distance point) closest to the edge pixel may be assumed, a tangent line h1 of the first fitted curve is determined by using the second short-distance point, and a connecting line h2 between the second short-distance point and the edge pixel is determined. The tangent line h1 and the connecting line h2 should be perpendicular to each other. In this case, a specific position of the second short-distance point may be determined by using a product of a slope A1 of the tangent line h1 and a slope A2 of the connecting line h2 (for example, a calculation formula is determined by using the product of A1 and A2 being -1, to determine the specific position of the second short-distance point). Further, the distance between the edge pixel and the first fitted curve is determined based on a distance between the edge pixel and the second short-distance point. Alternatively, a shortest distance between the edge pixel and the first fitted curve being the quadratic curve may be determined in another manner. For example, assuming that a circle is determined by using the edge pixel as a center of the circle, a circle radius is the shortest distance between the edge pixel and the first fitted curve when the circle is tangent to the first fitted curve. For another example, when the first fitted curve is of another curve type, for example, when the first fitted curve is a curve determined based on a continuously differentiable function, the first fitted curve may be derived to determine a tangent line of a specific point (denoted as a second curve point) on the first fitted curve. This is because: A tangent line of a specific point on the curve is a straight line represented by a derivative of the curve at the point. A connecting line between the second curve point and the edge pixel is determined. When the connecting line and the tangent line of the second curve point are perpendicular to each other, a shortest distance between the edge pixel and the first fitted curve is obtained.

The quantity of inlier pixels is a quantity of inlier pixels of the fitted curve. A larger quantity of inlier pixels of a fitted curve indicates that the fitted curve is a fitted curve most conforming to edge pixel distribution. The quantity threshold may be a minimum value that needs to be satisfied by the quantity of inlier pixels when the first fitted curve is determined as the edge curve. In other words, when the quantity of inlier pixels of the first fitted curve is greater than or equal to the quantity threshold, the first fitted curve is determined as the edge curve of the target object. In other words, when the quantity of inlier pixels of the first fitted curve satisfies a requirement, the first fitted curve may be directly determined as the edge curve. Further, if the first fitted curve does not satisfy the requirement (that is, the quantity of inlier pixels corresponding to the first fitted curve is less than the quantity threshold), the operation of selecting (for example, randomly selecting) M edge pixels from the N edge pixels included in the edge pixel set may be repeated, so that another fitted curve may be fitted based on reselected (for example, randomly reselected) M edge pixels, so that the edge curve of the target object may be determined from fitted curves fitted for all times.

Specifically, a specific process in which the computer device determines the edge curve of the target object based on the fitted curve corresponding to the M first fitting pixels may alternatively be described as: When determining the fitted curve corresponding to the M first fitting pixels, the computer device may record a quantity of curve fitting times associated with the edge curve, and determine a quantity of inlier pixels of the fitted curve corresponding to the M first fitting pixels as an initial quantity of inlier pixels, where the quantity of inlier pixels is a quantity of inlier pixels of the fitted curve. Further, the computer device may notify, when the quantity of curve fitting times does not reach the quantity-of-fitting-times threshold, to perform the operation of selecting (for example, randomly selecting) M edge pixels from the N edge pixels included in the edge pixel set, and determine the selected M edge pixels as M second fitting pixels, to perform curve fitting processing based on the M second fitting pixels to obtain a fitted curve corresponding to the M second fitting pixels. Further, the computer device may obtain a quantity of inlier pixels of the fitted curve corresponding to the M second fitting pixels, and determine the quantity of inlier pixels of the fitted curve corresponding to the M second fitting pixels as a to-be-compared quantity of inlier pixels. Further, the computer device may determine a target quantity of inlier pixels based on the to-be-compared quantity of inlier pixels and the initial quantity of inlier pixels, where the target quantity of inlier pixels herein is a larger quantity of inlier pixels in the to-be-compared quantity of inlier pixels and the initial quantity of inlier pixels. Further, the computer device may determine the edge curve of the target object based on a fitted curve corresponding to the target quantity of inlier pixels.

The quantity of curve fitting times is a quantity of times of randomly selecting M edge pixels from the edge pixel set to perform curve fitting processing to obtain a fitted curve. For example, when the fitted curve corresponding to the M first fitting pixels is obtained, the quantity of curve fitting times may be 1. Each time a fitted curve is calculated subsequently, the quantity of curve fitting times may be updated. For example, the quantity of curve fitting times may be increased by 1 until an updated quantity of curve fitting times reaches the quantity-of-fitting-times threshold. In this case, the edge curve of the target object may be determined, within the preset quantity-of-fitting-times threshold, from a plurality of fitted curves obtained through fitting.

The initial quantity of inlier pixels is a quantity of inlier pixels of the fitted curve corresponding to the first fitting pixels.

The quantity-of-fitting-times threshold is a maximum value of a quantity of times of repeatedly performing curve fitting to obtain a fitted curve. In other words, when the quantity of curve fitting times does not reach the quantity-of-fitting-times threshold, the operation of randomly selecting M edge pixels and performing curve fitting based on the selected M edge pixels to obtain a fitted curve needs to be repeatedly performed until the quantity of curve fitting times reaches the quantity-of-fitting-times threshold (or a quantity of inlier pixels of a fitted curve is greater than or equal to the quantity threshold).

The second fitting pixels may be M edge pixels randomly selected from the edge pixel set next time after the first fitted curve is determined. For a specific implementation of determining the fitted curve corresponding to the M second fitting pixels, refer to the foregoing related descriptions of determining the fitted curve corresponding to the M first fitting pixels, and details are not described herein.

The to-be-compared quantity of inlier pixels is a quantity of inlier pixels of the fitted curve corresponding to the M second fitting pixels. The target quantity of inlier pixels is a larger quantity of inlier pixels in the to-be-compared quantity of inlier pixels and the initial quantity of inlier pixels.

When determining the edge curve of the target object based on the fitted curve corresponding to the target quantity of inlier pixels, the computer device may determine the fitted curve corresponding to the target quantity of inlier pixels as the edge curve of the target object. In other words, a fitted curve with a largest quantity of inlier pixels in fitted curves obtained through fitting for all times is determined as the edge curve.

A specific process in which the computer device determines the edge curve of the target object based on the fitted curve corresponding to the target quantity of inlier pixels may also be described as: The computer device may update the quantity of curve fitting times when determining the fitted curve corresponding to the M second fitting pixels. Further, when an updated quantity of curve fitting times does not reach the quantity-of-fitting-times threshold, the computer device notifies to perform the operation of selecting (for example, randomly selecting) M edge pixels from the N edge pixels included in the edge pixel set. Further, the computer device may determine the selected M edge pixels as M third fitting pixels, and perform curve fitting processing based on the M third fitting pixels, to obtain a fitted curve corresponding to the M third fitting pixels. Further, the computer device may obtain a quantity of inlier pixels of the fitted curve corresponding to the M third fitting pixels, and update the to-be-compared quantity of inlier pixels based on the quantity of inlier pixels of the fitted curve corresponding to the M third fitting pixels. Further, the computer device may update the target quantity of inlier pixels based on an updated to-be-compared quantity of inlier pixels. An updated target quantity of inlier pixels is a larger quantity of inlier pixels in the updated to-be-compared quantity of inlier pixels and the target quantity of inlier pixels before the update.

The third fitting pixels may be M edge pixels randomly selected from the edge pixel set next time after the second fitted curve is determined. For a specific implementation of determining the fitted curve corresponding to the M third fitting pixels, refer to the foregoing related descriptions of determining the fitted curve corresponding to the M first fitting pixels, and details are not described herein.

The updating the to-be-compared quantity of inlier pixels based on the quantity of inlier pixels of the fitted curve corresponding to the M third fitting pixels may be specifically determining the quantity of inlier pixels of the fitted curve corresponding to the M third fitting pixels as an updated to-be-compared quantity of inlier pixels. In addition, the updating the target quantity of inlier pixels based on an updated to-be-compared quantity of inlier pixels may be specifically determining the larger quantity of inlier pixels in the updated to-be-compared quantity of inlier pixels and the target quantity of inlier pixels before the update as the updated target quantity of inlier pixels.

In a process of repeatedly selecting M edge pixels from the edge pixel set and performing fitting based on the selected M edge pixels to obtain a fitted curve, the to-be-compared quantity of inlier pixels and the target quantity of inlier pixels may be continuously updated. For example, assuming that the quantity-of-fitting-times threshold is 5, M edge pixels are selected from the edge pixel set for the first time, the selected M edge pixels are determined as first fitting pixels, a fitted curve 1 is obtained through fitting based on the first fitting pixels, and a quantity of inlier pixels corresponding to the fitted curve 1 is determined as an initial quantity of inlier pixels. In this case, the quantity of curve fitting times is 1. When a quantity of inlier pixels of the fitted curve 1 is less than the quantity threshold, and the quantity of curve fitting times is less than the quantity-of-fitting-times threshold (namely, 5), M edge pixels may be reselected from the edge pixel set for the second time, the reselected M edge pixels are determined as second fitting pixels, a fitted curve 2 is obtained through fitting based on the second fitting pixels, and a quantity of inlier pixels corresponding to the fitted curve 2 is determined as a to-be-compared quantity of inlier pixels. In this case, the quantity of curve fitting times is 2. Further, a larger quantity of inlier pixels in the initial quantity of inlier pixels and the to-be-compared quantity of inlier pixels may be determined as a target quantity of inlier pixels. Further, when the quantity of inlier pixels of the fitted curve 2 is less than the quantity threshold, and the quantity of curve fitting times is less than the quantity-of-fitting-times threshold (namely, 5), M edge pixels may be reselected from the edge pixel set for the third time, the reselected M edge pixels are determined as third fitting pixels, and a fitted curve 3 is obtained through fitting based on the third fitting pixels. Further, the to-be-compared quantity of inlier pixels may be updated by using a quantity of inlier pixels corresponding to the fitted curve 3 (in other words, the quantity of inlier pixels corresponding to the fitted curve 3 is determined as a new to-be-compared quantity of inlier pixels). The target quantity of inlier pixels is updated by using the new to-be-compared quantity of inlier pixels (in other words, a larger quantity of inlier pixels in the to-be-compared quantity of inlier pixels and the target quantity of inlier pixels is determined as a new target quantity of inlier pixels). In this case, the quantity of curve fitting times is 3. The rest can be deduced by analogy. The operation of randomly selecting M edge pixels and determining a fitted curve based on the selected M edge pixels is continuously repeated to update the target quantity of inlier pixels, until a fitting ending condition is reached. In this case, an updated target quantity of inlier pixels is a largest quantity of inlier pixels in quantities of inlier pixels of fitted curves obtained through fitting for all times.

A condition (namely, the fitting ending condition) of not repeatedly selecting M pixels from the edge pixel set and determining a fitted curve may be that the quantity of curve fitting times reaches the quantity-of-fitting-times threshold. In other words, a condition of repeatedly selecting M pixels from the edge pixel set and determining a fitted curve may be that the quantity of curve fitting times does not reach the quantity-of-fitting-times threshold.

Specifically, a specific process in which the computer device determines the edge curve of the target object based on the fitted curve corresponding to the target quantity of inlier pixels may also be described as: The computer device may update the quantity of curve fitting times when determining the fitted curve corresponding to the M second fitting pixels. Further, the computer device may determine the fitted curve corresponding to the target quantity of inlier pixels as the edge curve of the target object when an updated quantity of curve fitting times reaches the quantity-of-fitting-times threshold.

The updating the quantity of curve fitting times may be increasing the quantity of curve fitting times by 1. The target quantity of inlier pixels may be used for recording a largest quantity of inlier pixels in previously calculated quantities of inlier pixels of a plurality of fitted curves. Therefore, the determining the fitted curve corresponding to the target quantity of inlier pixels as the edge curve of the target object may be determining a fitted curve with the largest quantity of inlier pixels in the calculated fitted curves as the edge curve.

In some embodiments, the fitting ending condition may alternatively be that a quantity of inlier pixels of a fitted curve is greater than or equal to the quantity threshold, or the quantity of curve fitting times reaches the quantity-of-fitting-times threshold. In other words, when the quantity of inlier pixels of the fitted curve is greater than or equal to the quantity threshold, or the quantity of curve fitting times reaches the quantity-of-fitting-times threshold, the operation of selecting M pixels from the edge pixel set and determining a fitted curve is not repeatedly performed, and a fitted curve corresponding to a current largest quantity of inlier pixels is determined as the edge curve. The condition of repeatedly performing the operation of selecting M pixels from the edge pixel set and determining a fitted curve may be that the quantity of curve fitting times does not reach the quantity-of-fitting-times threshold and the quantity of inlier pixels of the fitted curve is less than the quantity threshold. This is not limited herein. In other words, when the quantity of curve fitting times does not reach the quantity-of-fitting-times threshold and the quantity of inlier pixels of the fitted curve is less than the quantity threshold, the operation of selecting M pixels from the edge pixel set and determining a fitted curve may be repeatedly performed. Alternatively, when the quantity of curve fitting times does not reach the quantity-of-fitting-times threshold, the operation of selecting M pixels from the edge pixel set and determining a fitted curve may be repeatedly performed.

In some embodiments of this application, each time M edge pixels are determined from the edge pixel set and a fitted curve is obtained through fitting based on the determined M edge pixels, a quantity of inlier pixels of the fitted curve obtained through fitting is recorded, then the quantities of inlier pixels of all the fitted curves are traversed to determine a largest quantity of inlier pixels, and a fitted curve corresponding to the largest quantity of inlier pixels is determined as the edge curve.

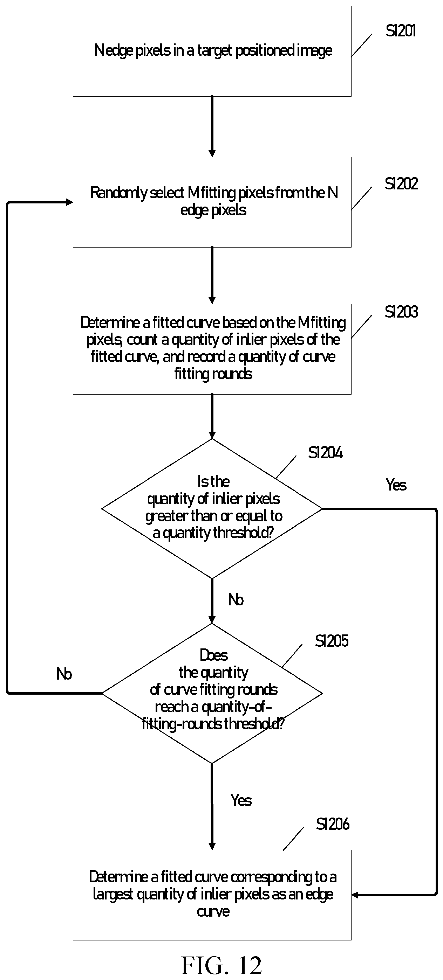

For example, a process of determining the edge curve is described herein with reference to a figure. Refer to FIG. 12. FIG. 12 is a schematic flowchart of determining an edge curve according to some embodiments of this application. As shown in FIG. 12, when needing to determine the edge curve, the computer device may determine N edge pixels in a target positioned image based on a foreground region in the target positioned image (that is, operation S1201). Further, the computer device may randomly select M fitting pixels from the N edge pixels (that is, operation S1202), then determine a fitted curve based on the M fitting pixels, count a quantity of inlier pixels of the fitted curve, and record a quantity of curve fitting times (that is, operation S1203). Further, the computer device may determine whether the quantity of inlier pixels is greater than or equal to the quantity threshold (that is, operation S1204). If the quantity of inlier pixels is greater than or equal to the quantity threshold, the computer device may determine a fitted curve corresponding to a largest quantity of inlier pixels as the edge curve (that is, operation S1206). In other words, the computer device determines a fitted curve whose quantity of inlier pixels is greater than or equal to the quantity threshold as the edge curve.

In some embodiments, as shown in FIG. 12, if the quantity of inlier pixels is less than the quantity threshold, whether the quantity of curve fitting times reaches the quantity-of-fitting-times threshold may be determined (that is, operation S1205). If the quantity of curve fitting times reaches the quantity-of-fitting-times threshold, a fitted curve corresponding to a largest quantity of inlier pixels may be determined as the edge curve (that is, operation S1206). The largest quantity of inlier pixels may be a target quantity of inlier pixels obtained by updating a target quantity of inlier pixels based on the quantity of inlier pixels of the fitted curve obtained when the quantity of curve fitting times reaches the quantity-of-fitting-times threshold, or may be a largest quantity of inlier pixels in quantities of inlier pixels of fitted curves obtained through fitting for all times.

In some embodiments, as shown in FIG. 12, if the quantity of curve fitting times does not reach the quantity-of-fitting-times threshold, operations S1202 to S1206 may be repeatedly performed until the quantity of curve fitting times reaches the quantity-of-fitting-times threshold or a quantity of inlier pixels is greater than or equal to the quantity threshold.

It can be learned from this that in some embodiments of this application, an initial positioned region may be first determined quickly in the service image based on an object detection region in a template image, then a pixel position transformation relationship may be determined based on the initial positioned region and the object detection region, and pixel position transformation is performed on a pre-marked local region (namely, the foregoing local reference region) in the template image, to obtain a local mapped region corresponding to the local reference region, and quickly use the local mapped region as a target positioned region positioned in the service image, so that when a foreground region is subsequently identified in a target positioned image corresponding to the target positioned region, an edge pixel set of the target object may be determined from pixels in the foreground region, to randomly select M edge pixels from N pixels included in the edge pixel set, and use the randomly selected M edge pixels as M first fitting pixels to be used for curve fitting processing. In this way, the edge curve may be quickly and accurately determined by using a fitted curve corresponding to the M first fitting pixels. In other words, in some embodiments of this application, in a process of obtaining the edge curve through fitting, a plurality of different fitted curves may be obtained through fitting by using M fitting pixels randomly selected from the edge pixel set each time, so that the edge curve of the target object may be determined from the plurality of different fitted curves obtained through fitting. In this way, a quantity of edge curves that satisfy a fitting condition but actually greatly differ can be reduced, and accuracy and stability of the edge curve that is of the target object and that is obtained through fitting can be improved.

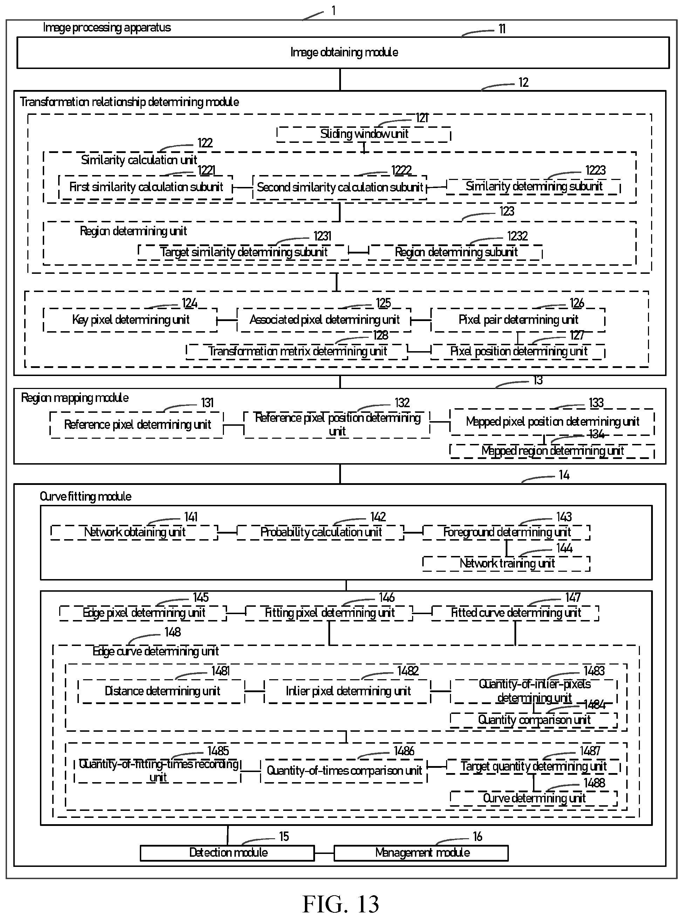

Refer to FIG. 13. FIG. 13 is a schematic structural diagram of an image processing apparatus according to various embodiments of this application. As shown in FIG. 13, the image processing apparatus 1 may be a computer program (including program code) running on a computer device. For example, the image processing apparatus 1 is application software. The image processing apparatus 1 may be configured to perform corresponding operations in the image processing method provided in the embodiments of this application. As shown in FIG. 13, the image processing apparatus 1 may include an image obtaining module 11 and a transformation relationship determining module 12.

The image obtaining module 11 is configured to: obtain a service image including a target object, obtain a template image used for assisting in positioning the target object, and determine, from the template image, an object detection region corresponding to a template object, the template object being an object that exists in the template image and that has a same object type as the target object, and the region size of the object detection region being smaller than the region size of the service image.

The transformation relationship determining module 12 is configured to: search the service image for a region matching the object detection region, determine the found region as an initial positioned region of the target object, and determine a pixel position transformation relationship based on a pixel position of a pixel in the object detection region and a pixel position of a pixel in the initial positioned region.

A region mapping module 13 is configured to: determine, in the service image based on the pixel position transformation relationship when a local reference region is determined from the template image, a local mapped region corresponding to the local reference region, and use the local mapped region as a target positioned region of the target object, where the local mapped region is a region obtained by performing pixel position transformation on pixels in the local reference region based on the pixel position transformation relationship.

A curve fitting module 14 is configured to: identify, in a target positioned image corresponding to the target positioned region, a foreground region corresponding to the target object, and perform edge curve fitting processing on pixels in the foreground region to obtain an edge curve of the target object.

The transformation relationship determining module 12 includes: a sliding window unit 121, a similarity calculation unit 122, and a region determining unit 123.

The sliding window unit 121 is configured to: determine, in the service image based on the region size of the object detection region, a sliding window used for window sliding, and determine, in the service image, a window position of the sliding window as a to-be-matched region in the service image, the region size of the to-be-matched region being consistent with the region size of the object detection region.

The similarity calculation unit 122 is configured to determine a region similarity between the to-be-matched region and the object detection region by using a pixel value of each pixel in the to-be-matched region and a pixel value of each pixel in the object detection region.

The region determining unit 123 is configured to determine, in the service image based on the region similarity, a region matching the object detection region.

For processing processes of the sliding window unit 121, the similarity calculation unit 122, and the region determining unit 123, refer to related descriptions in the embodiment of FIG. 3, and details are not described herein.

The to-be-matched region includes a first sliding window region and a second sliding window region, the first sliding window region is a region determined when the sliding window is slid to a first window position, the second sliding window region is a region determined when the sliding window is slid to a second window position, and the second window position is a window position next to the first window position.

The similarity calculation unit 122 includes a first similarity calculation subunit 1221, a second similarity calculation subunit 1222, and a similarity determining subunit 1223.

The first similarity calculation subunit 1221 is configured to: determine a region similarity between the first sliding window region and the object detection region by using a pixel value of each pixel in the first sliding window region and the pixel value of each pixel in the object detection region, and determine the region similarity between the first sliding window region and the object detection region as a first region similarity.

The second similarity calculation subunit 1222 is configured to: determine a region similarity between the second sliding window region and the object detection region by using a pixel value of each pixel in the second sliding window region and the pixel value of each pixel in the object detection region, and determine the region similarity between the second sliding window region and the object detection region as a second region similarity.

The similarity determining subunit 1223 is configured to determine the region similarity between the to-be-matched region and the object detection region based on the first region similarity and the second region similarity.

For processing processes of the first similarity calculation subunit 1221, the second similarity calculation subunit 1222, and the similarity determining subunit 1223, refer to related descriptions in the embodiment of FIG. 3, and details are not described herein.

The region determining unit 123 specifically includes a target similarity determining subunit 1231 and a region determining subunit 1232.

The target similarity determining subunit 1231 is configured to determine a target region similarity based on the first region similarity and the second region similarity, where the target region similarity is a region similarity that is determined in the first region similarity and the second region similarity and that has a larger value.

The region determining subunit 1232 is configured to determine, in the service image based on a to-be-matched region corresponding to the target region similarity, the region matching the object detection region.

For processing processes of the target similarity determining subunit 1231 and the region determining subunit 1232, refer to related descriptions in the embodiment of FIG. 3, and details are not described herein.

The first sliding window region includes an $i^{th}$ pixel, and the object detection region includes a $j^{th}$ pixel, where $i$ and $j$ are positive integers that are consistent with each other; and a pixel position of the $i^{th}$ pixel in the first sliding window region remains consistent with a pixel position of the $j^{th}$ pixel in the object detection region.

The first similarity calculation subunit 1221 is specifically configured to:

determine, as a first pixel average of the first sliding window region, an average obtained by performing average calculation on the pixel values of the pixels in the first sliding window region;

determine, as a second pixel average of the object detection region, an average obtained by performing average calculation on the pixel values of the pixels in the object detection region;

determine a difference between a pixel value of the $i^{th}$ pixel in the first sliding window region and the first pixel average as a first difference corresponding to the $i^{th}$ pixel, and determine a difference between a pixel value of the $j^{th}$ pixel in the object detection region and the second pixel average as a second difference corresponding to the j$^{th}$ pixel; and

determine the region similarity between the first sliding window region and the object detection region based on the first difference corresponding to the i$^{th}$ pixel and the second difference corresponding to the j$^{th}$ pixel.

The transformation relationship determining module 12 includes: a key pixel determining unit 124, an associated pixel determining unit 125, a pixel pair determining unit 126, a pixel position determining unit 127, and a transformation matrix determining unit 128.

The key pixel determining unit 124 is configured to determine K key pixels from the initial positioned region, where K is a positive integer greater than 1.

The associated pixel determining unit 125 is configured to determine, in the object detection region, K associated pixels corresponding to the K key pixels, where one key pixel corresponds to one associated pixel.

The pixel pair determining unit 126 is configured to construct K pixel pairs based on the K key pixels and the K associated pixels, where one pixel pair includes one key pixel and one corresponding associated pixel.

The pixel position determining unit 127 is configured to determine pixel positions of the K key pixels and pixel positions of the K associated pixels in a target coordinate system.

The transformation matrix determining unit 128 is configured to calculate, based on the pixel position of the key pixel and the pixel position of the associated pixel included in each of the K pixel pairs, a pixel position transformation matrix representing the pixel position transformation relationship.

For processing processes of the key pixel determining unit 124, the associated pixel determining unit 125, the pixel pair determining unit 126, the pixel position determining unit 127, and the transformation matrix determining unit 128, refer to related descriptions in the embodiment of FIG. 3, and details are not described herein.

The region mapping module 13 includes: a reference pixel determining unit 131, a reference pixel position determining unit 132, a mapped pixel position determining unit 133, and a mapped region determining unit 134.

The reference pixel determining unit 131 is configured to determine P reference pixels in the local reference region, where P is a positive integer greater than 1.

The reference pixel position determining unit 132 is configured to determine pixel positions of the P reference pixels in the target coordinate system.

The mapped pixel position determining unit 133 is configured to determine, in the service image based on the pixel position transformation relationship and the pixel positions of the P reference pixels, P mapped pixels corresponding to the P reference pixels, where one reference pixel corresponds to one mapped pixel.

The mapped region determining unit 134 is configured to determine, in the service image based on the P mapped pixels, the local mapped region corresponding to the local reference region.

For processing processes of the reference pixel determining unit 131, the reference pixel position determining unit 132, the mapped pixel position determining unit 133, and the mapped region determining unit 134, refer to related descriptions in the embodiment of FIG. 3, and details are not described herein.

The curve fitting module 14 includes: a network obtaining unit 141, a probability calculation unit 142, and a foreground determining unit 143.

The network obtaining unit 141 is configured to obtain a target foreground recognition network used for performing foreground region recognition.

The probability calculation unit 142 is configured to: input, into the target foreground recognition network, the target positioned image corresponding to the target positioned region, where the target foreground recognition network performs foreground region recognition processing on the target positioned image to obtain a foreground probability of each pixel in the target positioned image, and the foreground probability is a probability that each pixel identified in the target positioned image belongs to the foreground region.

The foreground determining unit 143 is configured to determine, based on the foreground probability of each pixel in the target positioned image, the foreground region corresponding to the target object.

For processing processes of the network obtaining unit 141, the probability calculation unit 142, and the foreground determining unit 143, refer to related descriptions in the embodiment of FIG. 3, and details are not described herein.

The curve fitting module 14 further includes a network training unit 144.

The network training unit 144 is specifically configured to:

obtain a sample object image, where the sample object image is associated with sample foreground region marking information of a sample object;

obtain an initial foreground recognition network, and input the sample object image into the initial foreground recognition network, where the initial foreground recognition network performs foreground region recognition processing on the sample object image, to obtain a foreground probability of each pixel in the sample object image; and

perform iterative training on the initial foreground recognition network based on the foreground probability of each pixel in the sample object image and the sample foreground region marking information, and determine an iteratively trained initial foreground recognition network as the target foreground recognition network.

For a processing process of the network training unit 144, refer to related descriptions in the embodiment of FIG. 3, and details are not described herein.

The curve fitting module 14 includes: an edge pixel determining unit 145, a fitting pixel determining unit 146, a fitted curve determining unit 147, and an edge curve determining unit 148.

The edge pixel determining unit 145 is configured to determine an edge pixel set of the target object from the pixels in the foreground region, where the edge pixel set includes N edge pixels, and N is a positive integer.

The fitting pixel determining unit 146 is configured to: select M edge pixels from the N edge pixels included in the edge pixel set, and determine the selected M edge pixels as M first fitting pixels, where M is a positive integer less than N.

The fitted curve determining unit 147 is configured to perform curve fitting processing on the M first fitting pixels, to obtain a fitted curve corresponding to the M first fitting pixels.

The edge curve determining unit 148 is configured to determine the edge curve of the target object based on the fitted curve corresponding to the M first fitting pixels.

For processing processes of the edge pixel determining unit 145, the fitting pixel determining unit 146, the fitted curve determining unit 147, and the edge curve determining unit 148, refer to related descriptions in the embodiment of FIG. 12, and details are not described herein.

The edge curve determining unit 148 includes: a distance determining unit 1481, an inlier pixel determining unit 1482, a quantity-of-inlier-pixels determining unit 1483, and a quantity comparison unit 1484.

The distance determining unit 1481 is configured to: determine the fitted curve corresponding to the M first fitting pixels as a first fitted curve, and calculate a distance between each of the N edge pixels and the first fitted curve.

The inlier pixel determining unit 1482 is configured to determine an inlier pixel of the first fitted curve from the N edge pixels based on the distance to the first fitted curve, where the inlier pixel is an edge pixel whose distance to the fitted curve is less than or equal to a distance threshold.

The quantity-of-inlier-pixels determining unit 1483 is configured to: count a quantity of inlier pixels associated with the first fitted curve, and determine the counted quantity of pixels as a quantity of inlier pixels of the first fitted curve.

The quantity comparison unit 1484 is configured to determine the first fitted curve as the edge curve of the target object if the quantity of inlier pixels of the first fitted curve is greater than or equal to a quantity threshold.

For processing processes of the distance determining unit 1481, the inlier pixel determining unit 1482, the quantity-of-inlier-pixels determining unit 1483, and the quantity comparison unit 1484, refer to related descriptions in the embodiment of FIG. 12, and details are not described herein.

The edge curve determining unit 148 includes: a quantity-of-fitting-times recording unit 1485, a quantity-of-times comparison unit 1486, a target quantity determining unit 1487, and a curve determining unit 1488.

The quantity-of-fitting-times recording unit 1485 is configured to: record, when the fitted curve corresponding to the M first fitting pixels is determined, a quantity of curve fitting times associated with the edge curve, and determine the quantity of inlier pixels of the fitted curve corresponding to the M first fitting pixels as an initial quantity of inlier pixels, where the quantity of inlier pixels is the quantity of inlier pixels of the fitted curve.

The quantity-of-times comparison unit 1486 is configured to notify, when the quantity of curve fitting times does not reach a quantity-of-fitting-times threshold, the fitting pixel determining unit 146 to perform the operation of selecting M edge pixels from the N edge pixels included in the edge pixel set.

The fitted curve determining unit 147 is configured to: determine the selected M edge pixels as M second fitting pixels, and perform curve fitting processing based on the M second fitting pixels, to obtain a fitted curve corresponding to the M second fitting pixels.

The quantity-of-inlier-pixels determining unit 1483 is configured to: obtain a quantity of inlier pixels of the fitted curve corresponding to the M second fitting pixels, and determine the quantity of inlier pixels of the fitted curve corresponding to the M second fitting pixels as a to-be-compared quantity of inlier pixels.

The target quantity determining unit 1487 is configured to determine a target quantity of inlier pixels based on the to-be-compared quantity of inlier pixels and the initial quantity of inlier pixels, where the target quantity of inlier pixels is a larger quantity of inlier pixels in the to-be-compared quantity of inlier pixels and the initial quantity of inlier pixels.

The curve determining unit 1488 is configured to determine the edge curve of the target object based on a fitted curve corresponding to the target quantity of inlier pixels.

For processing processes of the quantity-of-fitting-times recording unit 1485, the quantity-of-times comparison unit 1486, the target quantity determining unit 1487, and the curve determining unit 1488, refer to related descriptions in the embodiment of FIG. 12, and details are not described herein.

The curve determining unit 1488 is specifically configured to:

update the quantity of curve fitting times when the fitted curve corresponding to the M second fitting pixels is determined; and

determine the fitted curve corresponding to the target quantity of inlier pixels as the edge curve of the target object when an updated quantity of curve fitting times reaches the quantity-of-fitting-times threshold.

The fitted curve determining unit 147 is specifically configured to:
obtain a to-be-fitted curve function, and perform curve fitting processing based on the M first fitting pixels and the to-be-fitted curve function, to obtain the fitted curve corresponding to the M first fitting pixels.

The edge curve includes an edge straight line.

The image processing apparatus 1 further includes a detection module 15 and a management module 16.

The detection module 15 is configured to: determine a to-be-detected pixel in the target positioned image, and determine, based on a distance between the to-be-detected pixel and the edge straight line, a detection value associated with the to-be-detected pixel.

The management module 16 is configured to perform object quality management on the target object based on the detection value.

For processing processes of the detection module 15 and the management module 16, refer to related descriptions in the embodiment of FIG. 3, and details are not described herein.

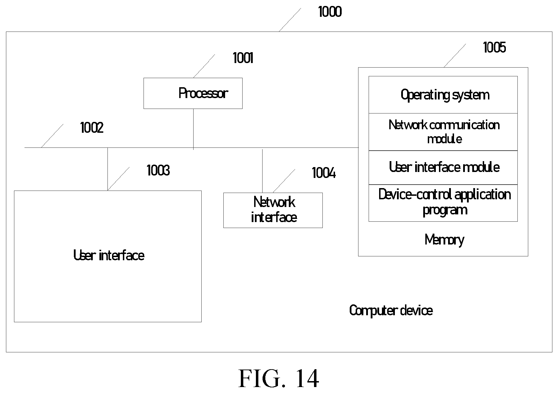

Refer to FIG. 14. FIG. 14 is a schematic structural diagram of a computer device according to various embodiments of this application. As shown in FIG. 14, the computer device 1000 may include: a processor 1001, a network interface 1004, and a memory 1005. The computer device 1000 may further include: a user interface 1003 and at least one communication bus 1002. The communication bus 1002 is configured to implement connection and communication between the components. The user interface 1003 may include a display and a keyboard. In some embodiments, the user interface 1003 may further include a standard wired interface and a standard wireless interface. In some embodiments, the network interface 1004 may include a standard wired interface and a standard wireless interface (for example, a wireless fidelity (Wi-Fi) interface). The memory 1005 may be a high-speed random access memory (RAM), or may be a non-volatile memory, for example, at least one magnetic disk memory. In some embodiments, the memory 1005 may alternatively be at least one storage apparatus away from the processor 1001. As shown in FIG. 14, the memory 1005 used as a computer-readable storage medium may include an operating system, a network communication module, a user interface module, and a device-control application program.

In the computer device 1000 shown in FIG. 14, the network interface 1004 may provide a network communication function. The user interface 1003 is mainly configured to provide an input interface for a user. The processor 1001 may be configured to invoke the device-control application program stored in the memory 1005, to perform descriptions of the image processing method in any one of the foregoing embodiments. Details are not described herein again. In addition, descriptions of beneficial effects achieved by using the same method are not provided again.

In addition, various embodiments of this application further provides a computer-readable storage medium. The computer-readable storage medium stores a computer program executed by the foregoing image processing apparatus, and the computer program includes program instructions. When the processor executes the program instructions, the descriptions of the image processing method in the foregoing embodiments can be performed. Therefore, details are not described herein again. In addition, descriptions of beneficial effects achieved by using the same method are not provided again. For technical details that are not disclosed in the embodiment of the computer-readable storage medium in this application, refer to the descriptions of the method embodiments of this application.

The computer-readable storage medium may be an internal storage unit of the image processing apparatus provided in any one of the foregoing embodiments or the foregoing computer device, for example, a hard disk or memory of the computer device. Alternatively, the computer-readable storage medium may be an external storage device of the computer device, for example, a plug-in hard disk, a smart media card (SMC), a secure digital (SD) card, or a flash card equipped on the computer device. Further, the computer-readable storage medium may include both an internal storage unit and an external storage device of the computer device. The computer-readable storage medium is configured to store the computer program and other programs and data that are required by the computer device. The computer-readable storage medium may be further configured to temporarily store data that has been outputted or is to be outputted.

In addition, various embodiments of this application further provides a computer program product or a computer program. The computer program product or the computer program includes computer instructions, and the computer instructions are stored in a computer-readable storage medium. A processor of a computer device reads the computer instructions from the computer-readable storage medium, and the processor executes the computer instructions, so that the computer device performs the method provided in any one of the foregoing corresponding embodiments. In addition, descriptions of beneficial effects achieved by using the same method are not provided again. For technical details that are not disclosed in the embodiment of the computer program product or the computer program in this application, refer to descriptions of the method embodiments of this application.

The terms "first", "second", and the like in this specification, the claims, and the accompanying drawings of the embodiments of this application are intended to distinguish between different objects, instead of describing a particular sequence. In addition, the term "include" and any variation thereof are intended to cover a non-exclusive inclusion. For example, a process, a method, an apparatus, a product, or a device including a series of operations or units is not limited to listed operations or modules, but in some embodiments, further includes operations or modules not listed or includes other operations or units inherent to the process, the method, the apparatus, the product, or the device.

A person of ordinary skill in the art may be aware that, in combination with the examples described in the embodiments disclosed in this specification, units and algorithm operations may be implemented by electronic hardware, computer software, or a combination thereof. To clearly describe interchangeability between the hardware and the software, the foregoing has generally described compositions and operations of each example according to functions. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

What is disclosed above is merely exemplary embodiments of this application, and certainly is not intended to limit the scope of the claims of this application. Therefore, equivalent variations made in accordance with the claims of this application shall fall within the scope of this application.

**Claims**

1. An image processing method, the method comprising:

   obtaining a service image that includes a target object, and obtaining a template image that includes a template object, the template object and the target object are of the same object type;
   determining, in the template image, an object detection region where the template object is located, a region size of the object detection region being smaller than a region size of the service image;
   identifying, in the service image, a region having a highest region similarity degree with the object detection region as a matched region;
   determining a pixel position mapping matrix between the template image and the service image based on first coordinates of pixels in the object detection region and second coordinates of pixels in the matched region;
   determining a local mapped region in the service image corresponding to a predefined local reference region in the template image based on the pixel position mapping matrix; and
   identifying, in the local mapped region, a foreground region of the target object; and
   obtaining an edge curve of the target object in the local mapped region by performing edge curve fitting processing on pixels in the foreground region.

2. The method according to claim 1, wherein the identifying, in the service image, the region having the highest region similarity degree with the object detection region as the matched region comprises:

   determining a sliding window having the same size as the object detection region, and during sliding of the sliding window in the service image, determining, for each window position of the sliding window, a region similarity degree between a current region covered by the sliding window and the object detection region;
   determining a region at a window position having the highest region similarity degree as the matched region.

3. The method according to claim 1 or 2, wherein regions covered by the sliding window when sliding in the service image comprises a first sliding window region and a second sliding window region, the first sliding window region is a region determined when the sliding window slides to a first window position, the second sliding window region is a region determined when the sliding window slides to a second window position, and the second window position is a window position next to the first window position; and
   the determining, for each window position of the sliding window, the region similarity between the current region covered by the sliding window and the object detection region comprises:

   determining a first region similarity between the first sliding window region and the object detection region based on a pixel value of each pixel in the first sliding window region and a pixel value of each pixel in the object detection region;

determining a second region similarity between the second sliding window region and the object detection region based on a pixel value of each pixel in the second sliding window region and the pixel value of each pixel in the object detection region; and

determining the region similarity between the region and the object detection region based on the first region similarity and the second region similarity.

4. The method according to any one of claims 1 to 3, wherein the determining the region at the window position having the highest region similarity degree as the matched region comprises:

determining a larger one of the first region similarity and the second region similarity; and
determining the matched region based on a region corresponding to the larger one.

5. The method according to any one of claims 1 to 4, wherein the first sliding window region comprises an $i^{th}$ pixel, and the object detection region comprises a $j^{th}$ pixel, wherein i and j are positive integers of the same value; and a pixel position of the $i^{th}$ pixel in the first sliding window region is consistent with a pixel position of the $j^{th}$ pixel in the object detection region; and
the determining the region similarity between the first sliding window region and the object detection region based on the pixel value of each pixel in the first sliding window region and the pixel value of each pixel in the object detection region comprises:

determining a first pixel average value of the pixel values of the pixels in the first sliding window region;
determining a second pixel average value of the pixel values of the pixels in the object detection region;
for each pixel i in the first sliding window region and each pixel j in the object detection region, determining a first difference between a pixel value of the $i^{th}$ pixel in the first sliding window region and the first pixel average, and determining a second difference between a pixel value of the $j^{th}$ pixel in the object detection region and the second pixel average; and
determining the region similarity between the first sliding window region and the object detection region based on the first difference of each pixel in the first sliding window region and the second difference of each pixel in the object detection region.

6. The method according to any one of claims 1 to 5, wherein the pixel position mapping matrix is used for mapping coordinates of pixels in the matched region into coordinates of pixels in the object detection region; the determining the pixel position mapping matrix between the template image and the service image based on the first coordinates and the second coordinates comprises:

selecting K key pixels from the matched region, wherein K is a positive integer greater than 1;
determining, in the object detection region, K associated pixels corresponding to the K key pixels, wherein one key pixel corresponds to one associated pixel, positions of the K associated pixels in the object detection region are the same as positions of the K key pixels in the matched region;
constructing K pairs of pixels based on the K key pixels and the K associated pixels, wherein one pair of pixels comprises one key pixel and one corresponding associated pixel;
determining coordinates of the K key pixels and coordinates of the K associated pixels in a coordinate system; and
calculating the pixel position mapping matrix based on the coordinates of the key pixels and the coordinates of the associated pixels comprised in the K pairs of pixels.

7. The method according to any one of claims 1 to 6, wherein the determining the local mapped region in the service image corresponding to the predefined local reference region in the template image based on the pixel position mapping matrix comprises:

determining P reference pixels in the local reference region, wherein P is a positive integer greater than 1;
determining coordinates of the P reference pixels in a coordinate system;
determining, in the service image based on the pixel position mapping matrix and the coordinates of the P reference pixels, P mapped pixels corresponding to the P reference pixels, wherein one reference pixel corresponds to one mapped pixel; and
determining, in the service image, the local mapped region corresponding to the local reference region based on the P mapped pixels.

8. The method according to any one of claims 1 to 7, wherein the identifying, in the local mapped region, the foreground region of the target object comprises:

obtaining a foreground recognition network used for performing foreground region recognition;
inputting the local mapped region into the foreground recognition network, wherein the foreground recognition network obtains a foreground probability of each pixel in the local mapped region, and the foreground probability represents a probability that a pixel belongs to the foreground region; and
determining, based on the foreground probability of each pixel, the foreground region corresponding to the target object.

9. The method according to any one of claims 1 to 8, further comprising:

obtaining a sample object image with foreground region annotation information;
obtaining an initial foreground recognition network, and inputting the sample object image into the initial foreground recognition network, wherein the initial foreground recognition network obtains a foreground probability of each pixel in the sample object image; and
training the initial foreground recognition network based on the foreground probability of each pixel in the sample object image and the foreground region annotation information to obtain the foreground recognition network.

10. The method according to any one of claims 1 to 9, wherein the obtaining the edge curve of the target object in the local mapped region by performing edge curve fitting processing on the pixels in the foreground region comprises:

determining an edge pixel set of the target object from pixels in the foreground region, wherein the edge pixel set comprises N edge pixels, and N is a positive integer;
selecting one or more sets of M fitting pixels from the N edge pixels, wherein M is a positive integer less than N;
obtaining one or more fitted curves by performing curve fitting processing on the one or more sets of M fitting pixels; and
determining the edge curve of the target object based on the one or more fitted curves.

11. The method according to any one of claims 1 to 10, wherein the determining the edge curve of the target object based on the one or more fitted curves comprises:

determining a fitted curve corresponding to a first set of M fitting pixels as a first fitted curve, and calculating a distance between each of the N edge pixels and the first fitted curve;
determining an inlier pixel of the first fitted curve from the N edge pixels based on the distance to the first fitted curve, wherein the inlier pixel is an edge pixel whose distance to the fitted curve is less than or equal to a distance threshold;
counting a quantity of inlier pixels associated with the first fitted curve, and determining the counted quantity of pixels as a quantity of inlier pixels of the first fitted curve; and
determining the first fitted curve as the edge curve of the target object if the quantity of inlier pixels of the first fitted curve is greater than or equal to a quantity threshold.

12. The method according to any one of claims 1 to 11, wherein the determining the edge curve of the target object based on the one or more fitted curves comprises:

recording a quantity of curve fitting rounds associated with a first fitted curve of the one or more fitted curves, the first fitted curve has a first quantity of inlier pixels;
determining, when the quantity of curve fitting rounds is less than a quantity-of-fitting-rounds threshold, a second fitted curve of the one or more fitted curves, the second fitted curve has a second quantity of inlier pixels;
determining one of the first fitted curve and the second fitted curve that corresponds to a larger quantity of inlier pixels as the edge curve of the target object.

13. The method according to any one of claims 1 to 12, wherein the determining the edge curve comprises:

updating a quantity of curve fitting rounds every time a set of M fitting pixels is selected; and
determining one of the one or more fitted curves corresponding to a largest quantity of inlier pixels as the edge curve of the target object when an updated quantity of curve fitting rounds reaches a quantity-of-fitting-rounds threshold.

14. The method according to any one of claims 1 to 13, wherein the performing curve fitting processing on the one or more sets of M fitting pixels comprises:

obtaining a function model; and
obtaining one or more fitted curves based on the one or more sets of M fitting pixels and the function model.

15. The method according to any one of claims 1 to 14, wherein the edge curve comprises an edge straight line; and the method comprises:

determining a to-be-detected pixel in the local mapped region, and determining, based on a distance between the to-be-detected pixel and the edge straight line, a detection value associated with the to-be-detected pixel; and
performing object quality management on the target object based on the detection value.

16. An image processing apparatus, the apparatus comprising:

an image obtaining module, configured to: obtain a service image that includes a target object, obtain a template image that includes a template object, the template object and the target object are of the same object type, and determine an object detection region where the template object is located in the template image, a region size of the object detection region being smaller than a region size of the service image;
a transformation relationship determining module, configured to: identify, in the service image, a matched region having a highest region similarity degree with the object detection region, and determine a pixel position mapping matrix between the template image and the service image based on coordinates of pixels in the object detection region and coordinates of pixels in the matched region;
a region mapping module, configured to: determine a local mapped region in the service image corresponding to a predefined local reference region in the template image based on the pixel position mapping matrix; and
a curve fitting module, configured to: identify, in the local mapped region, a foreground region of the target object, and obtain an edge curve of the target object in the local mapped region by performing edge curve fitting processing on pixels in the foreground region.

17. A computer device, comprising a memory and a processor,
the memory being connected to the processor, the memory being configured to store a computer program, and the processor being configured to invoke the computer program, to cause the computer device to perform the method according to any one of claims 1 to 15.

18. A computer-readable storage medium, the computer-readable storage medium storing a computer program, and the computer program being adapted to be loaded and executed by a processor, to cause a computer device having the processor to perform the method according to any one of claims 1 to 15.

19. A computer program product, comprising a computer program or computer instructions, the computer program or computer instructions, when executed by a processor, implementing the method according to any one of claims 1 to 15.

FIG. 1

Target object 211a — Service image 201a

Template object 222a

Template image 202a

Object detection region 221a

d1

d2

S21: Search the service image 201a for a region matching the object detection region 221a

Service image 201a

Initial positioned region 212a

d1

d2

S22: Determine a pixel position transformation relationship 203a based on a pixel in the initial positioned region 212a and a pixel in the object detection region 221a

Local reference region 223a

Template image 202a

d3

d4

Pixel position transformation relationship 203a

S23: Determine, in the service image 201a based on the pixel position transformation relationship 203a, a local mapped region corresponding to the local reference region 223a

Target positioned region 213a

d3

d4

Service image 201a

S24: Determine a target positioned image 204a based on the target positioned region 213a, identify a foreground region of the target object in the target positioned image 204a, and perform fitting based on the foreground region to obtain an edge curve 214a

Target positioned image 204a

d3

Edge curve 214a

d4

FIG. 2

obtain a service image that includes a target object and obtain a template image that includes a template object, the template object and the target object are of the same object type; determine an object detection region where the template object is located in the template image, a region size of the object detection region being smaller than a region size of the service image ⟋ S101

identify, in the service image, a matched region having a highest region similarity degree with the object detection region; and determine a pixel position mapping matrix between the template image and the service image based on coordinates of pixels in the object detection region and coordinates of pixels in the matched region ⟋ S102

determine a local mapped region in the service image corresponding to a predefined local reference region in the template image based on the pixel position mapping matrix ⟋ S103

identify, in the local mapped region, a foreground region of the target object, and obtain an edge curve of the target object in the local mapped region by performing edge curve fitting processing on pixels in the foreground region ⟋ S104

FIG. 3

Template object
411a

Template image 41a

Object detection region
412a

FIG. 4

FIG. 5

Local reference
region 611a

Reference pixels
612a

x-axis

Template image
601a

y-axis

Determine, based on a pixel position
transformation relationship, mapped pixel
positions 613a corresponding to the reference
pixels 612a

Local reference region
611a

Mapped pixel positions
613a

x-axis

Template image
601a

y-axis

Determine mapped pixels 621a in a service image
602a based on the mapped pixel positions 613a, and
determine a local mapped region 622a based on the
mapped pixels 621a

Local mapped region
622a

Mapped pixels
621a

x-axis

Service image 602a

y-axis

FIG. 6

702

Target foreground recognition
network

701

721

722

703

Target positioned
image

Feature extraction
component

Foreground
recognition
component

Foreground region in
the target positioned
image

## FIG. 7

Feature extraction
component 721

Initial feature map
802

Feature extraction component

Target
positioned
image 801

Feature fusion

Image
feature
803

## FIG. 8

Target positioned image
901

Identify a foreground region of a
target object in the target positioned
image 901

Foreground region 902

Background region 903

FIG. 9

obtain a service image that includes a target object and obtain a template image that includes a template object, the target object and the template object are of the same object type ⟋ S201

identify, in the service image, a matched region having a highest region similarity degree with the object detection region, and determine a pixel position mapping matrix between the template image and the service image based on coordinates of pixels in the object detection region and coordinates of pixels in the matched region ⟋ S202

determine a local mapped region in the service image corresponding to a predefined local reference region in the template image based on the pixel position mapping matrix ⟋ S203

identify, in the local mapped region, a foreground region of the target object, and determine an edge curve of the target object in the local mapped region by performing edge curve fitting processing on pixels in the foreground region ⟋ S204

Determine an edge pixel set of the target object from pixels in the foreground region, where the edge pixel set includes N edge pixels ⟋ S205

select one or more sets of M fitting pixels from the N edge pixels, where M is a positive integer less than N ⟋ S206

obtain one or more fitted curves by performing curve fitting processing on the one or more sets of M fitting pixels ⟋ S207

determine the edge curve of the target object based on the one or more fitted curves ⟋ S208

FIG. 10

FIG. 11

N edge pixels in a target positioned image — S1201

Randomly select M fitting pixels from the N edge pixels — S1202

Determine a fitted curve based on the M fitting pixels, count a quantity of inlier pixels of the fitted curve, and record a quantity of curve fitting rounds — S1203

Is the quantity of inlier pixels greater than or equal to a quantity threshold? — S1204

Yes

No

Does the quantity of curve fitting rounds reach a quantity-of-fitting-rounds threshold? — S1205

No

Yes

Determine a fitted curve corresponding to a largest quantity of inlier pixels as an edge curve — S1206

FIG. 12

FIG. 13

1000

1005

1001

Processor

Operating system

1002

Network communication module

User interface module

1003

Device-control application program

1004

Memory

Network interface

User interface

Computer device

FIG. 14

## INTERNATIONAL SEARCH REPORT

| International application No. |
| --- |
| **PCT/CN2024/106044** |

| A. | CLASSIFICATION OF SUBJECT MATTER |
| --- | --- |

G06V 10/75(2022.01)i

According to International Patent Classification (IPC) or to both national classification and IPC

| B. | FIELDS SEARCHED |
| --- | --- |

Minimum documentation searched (classification system followed by classification symbols)

IPC: G06V, G06F, G06T

Documentation searched other than minimum documentation to the extent that such documents are included in the fields searched

Electronic data base consulted during the international search (name of data base and, where practicable, search terms used)

CNTXT, ENTXT, DWPI, VEN, USTXT, CNKI, IEEE: 边缘, 识别, 检测, 曲线, 拟合, 参考, 基准, 标准, 模板, 图像, 目标, 对象, 变换, 映射, 对应, 关系, 局部, 部分, 区域, 确定, 提取, 选择, 样本, 前景, edge, identification, detect+, curve, fitting, reference, benchmark, standard, template, image, target, object, transformation, mapping, correspondence, relationship, part, region, area, determin+, extraction, select, sample, foreground

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117237681 A (CHONGQING TENCENT INFORMATION TECHNOLOGY CO., LTD.) 15 December 2023 (2023-12-15) claims 1-19 | 1-19 |
| A | CN 113450262 A (WUHAN KINGSOFT OFFICE SOFTWARE CO., LTD. et al.) 28 September 2021 (2021-09-28) claim 1 | 1-19 |
| A | US 2020302154 A1 (GUANGDONG OPPO MOBILE TELECOMMUNICATIONS CORP., LTD.) 24 September 2020 (2020-09-24) entire document | 1-19 |
| A | CN 115100158 A (BEIJING DAHENG IMAGE VISION CO., LTD.) 23 September 2022 (2022-09-23) entire document | 1-19 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 November 2024** | **08 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/106044** |

### C. DOCUMENTS CONSIDERED TO BE RELEVANT

| Category* | Citation of document, with indication, where appropriate, of the relevant passages | Relevant to claim No. |
|---|---|---|
| A | CN 115829929 A (SHENZHEN FUTURE VISION TECHNOLOGY CO., LTD.) 21 March 2023 (2023-03-21) entire document | 1-19 |
| A | CN 115661444 A (TENCENT TECHNOLOGY (SHENZHEN) CO., LTD.) 31 January 2023 (2023-01-31) entire document | 1-19 |
| A | JP 2023039282 A (SOFTBANK CORP.) 20 March 2023 (2023-03-20) entire document | 1-19 |
| A | US 2012063689 A1 (THE JOHNS HOPKINS UNIVERSITY) 15 March 2012 (2012-03-15) entire document | 1-19 |
| A | JP 2012208025 A (DAINIPPON SCREEN SEIZO K.K.) 25 October 2012 (2012-10-25) entire document | 1-19 |

Form PCT/ISA/210 (second sheet) (July 2022)

**INTERNATIONAL SEARCH REPORT**
Information on patent family members

International application No.

**PCT/CN2024/106044**

| Patent document cited in search report | | | Publication date (day/month/year) | Patent family member(s) | | | Publication date (day/month/year) |
|---|---|---|---|---|---|---|---|
| CN | 117237681 | A | 15 December 2023 | None | | | |
| CN | 113450262 | A | 28 September 2021 | None | | | |
| US | 2020302154 | A1 | 24 September 2020 | US | 11386699 | B2 | 12 July 2022 |
| | | | | EP | 3739502 | A1 | 18 November 2020 |
| | | | | WO | 2019137131 | A1 | 18 July 2019 |
| | | | | CN | 110020578 | A | 16 July 2019 |
| | | | | IN | 202027030934 | A | 02 October 2020 |
| CN | 115100158 | A | 23 September 2022 | None | | | |
| CN | 115829929 | A | 21 March 2023 | None | | | |
| CN | 115661444 | A | 31 January 2023 | None | | | |
| JP | 2023039282 | A | 20 March 2023 | None | | | |
| US | 2012063689 | A1 | 15 March 2012 | None | | | |
| JP | 2012208025 | A | 25 October 2012 | None | | | |

Form PCT/ISA/210 (patent family annex) (July 2022)

**REFERENCES CITED IN THE DESCRIPTION**

**Patent documents cited in the description**

- CN 2023111894721